# EUROPEAN PATENT SPECIFICATION

(11) **EP 0 486 023 B1**
(45) Date of publication and mention of the grant of the patent: **27.08.1997**
(21) Application number: 91119452.0
(22) Date of filing: 14.11.1991
(51) Int. Cl.: H04Q 11/00, H04Q 3/52

(54) **Self-routing network using optical gate array**
Selbstleitweglenkendes Netzwerk mit optischer Gattermatrix
Réseau d'acheminement autonome utilisant un assemblage de portes optiques

(30) Priority: 14.11.1990 JP 307649/90; 01.03.1991 JP 35970/91; 27.03.1991 JP 85880/91; 18.07.1991 JP 178234/91
(43) Date of publication of application: 20.05.1992
(73) Proprietor: NEC CORPORATION, Tokyo (JP)
(72) Inventor: Shuji, Suzuki, c/o NEC Corporation, Minato-ku, Tokyo (JP); Makoto, Nishio, c/o NEC Corporation, Minato-ku, Tokyo (JP)
(74) Representative: VOSSIUS & PARTNER

(56) References cited:
- GB-A- 945 373
- GB-A- 945 374
- US-A- 3 141 067
- US-A- 3 141 067
- US-A- 3 141 067
- US-A- 3 223 978
- US-A- 3 692 949
- APPLIED PHYSICS LETTERS vol. 57, NEW YORK US pages 540 - 542 , XP150171 I. OGURA ET AL 'Reconfigurable Optical Interconnection Using a Two-Dimensional Vertical to surface Transmission Electrophotonic Device Array'
- JOURNAL OF LIGHTWAVE TECHNOLOGY vol. LT-3, no. 2, April 1985, NEW YORK US pages 230 - 235 A. HIMENO ET AL '4X4 Optical-Gate Matrix Switch'
- CONFERENCE RECORD, IEEE INTERNATIONAL CONFERENCE ON COMMUNICATIONS, 15-19 APRIL 1990, VOL.3 PAGES 1125-1129, GEORGIA US , XP145999 S. SUZUKI ET AL 'Wavelength Division Switching Technology'

## Description

The present invention relates generally to optical self-routing networks for routing optical packets according to the information contained in the header of the packets.

In a prior art optical self-routing network, as described in "Springer Series in Electronics and Photonics", Vol, 25, pages 193-195, optical packet is fed into a splitter in which it is split into two replicas of the input signal, one being applied to an optical switch having two outlet terminals, and the other to an optical correlator. The optical correlator generates an optical output if the header of the incoming packet contains a predetermined bit sequence. The output of the correlator is converted to an electrical signal, amplified and applied to the control electrode of the optical switch to direct the incident light to one of its outlet terminals.

However, a serious disadvantage of the prior art system is the circuit complexity, and practical implementations would require a vast amount of optical, electro-optical and electronic components.

JOURNAL OF LIGHTWAVE TECHNOLOGY, vol. LT-3, no. 2, April 1985, NEW YORK, US;: pages 230-235; A. HIMENO et al.: "4x4 Optical-Gate Switch"; discloses an optical-gate matrix switch similar to the network as described in the preamble of claim 1. US-A-3 141 067 discloses an automatic electronic communication switch having gates arranged in an array and gate control means for controlling the gates of each set during successive intervals.

It is therefore an object of the present invention to provide an optical self-routing network which allows implementation with a smaller number of components.

This and other objects are met by the features defined in the characterizing part of claim 1.

According to a first aspect, the gate control means supplies successively shifted gate control electrical signals respectively to the optical gates of each set so that one of the optical gates of a given set exclusively allows passage of an optical signal incident thereon when the gate control electrical signal applied thereto is the earliest of the gate control electrical signals which are successively applied to the optical gates of the given set.

According to a second aspect, the optical gates of each set are commonly assigned a unique time interval, and those of the optical signals which are supplied to the optical gates of each set are successively shifted during the unique time interval. The gate control means exclusively causes one of the optical gates of each set to allow passage of an optical signal incident thereon when the incident optical signal is the earliest of the optical signals incident on the optical gates of the set.

According to a third specific aspect, the gate control means simultaneously supplies gate control electrical signals of different amplitudes respectively to the optical gates of each set so that one of the optical gates of a given set exclusively allows passage of an optical signal incident thereon when the amplitude of the gate control electrical signal applied thereto is the highest of the signals applied to the optical gates of the given set.

According to a fourth aspect, the gate control means simultaneously supplies gate control electrical signals of different amplitudes respectively to the optical gates of each set so that one of the optical gates of a given set exclusively allows passage of an optical signal incident thereon when the light intensity of the incident optical signal is the highest of the optical signals incident on the optical gates of the given set.

In a preferred embodiment of this invention, the optical signals are respectively carried on a plurality of wavelengths, and each of the optical gates is selectively transmissive of an optical signal of one of the wavelengths.

The present invention will be described in further detail with reference to the accompanying drawings, in which:
Fig. 1 is a block diagram of the optical self-routing network according to a first embodiment of the present invention;
Fig. 2 is a timing diagram associated with the first embodiment;
Fig. 3 is a block diagram of a modified form of the first embodiment of this invention, Fig. 3a being a side view of each optical gate;
Fig. 4 is a block diagram of a second embodiment of the present invention;
Fig. 5 is a timing diagram associated with Fig. 4;
Fig. 6 is a block diagram of a modified form of the second embodiment of this invention;
Fig. 7 is a timing diagram associated with Fig. 6;
Fig. 8 is a block diagram of a third embodiment of the present invention;
Fig. 9 is a timing diagram associated with Fig. 8;
Fig. 10 is a block diagram of a modified form of the third embodiment;
Fig. 11 is a timing diagram associated with Fig. 10;
Fig. 12 is a block diagram of a fourth embodiment of this invention;
Fig. 13 is a timing diagram associated with Fig. 12;
Fig. 14 is a block diagram of a modified form of the fourth embodiment;
Fig. 15 is a timing diagram associated with Fig. 14;
Fig. 16 is a block diagram of a fifth embodiment of this invention;
Fig. 17 is a timing diagram associated with Fig. 16;
Fig. 18 is a block diagram of a modified form of the fifth embodiment;
Fig. 19 is a timing diagram associated with Fig. 18;
Fig. 20 is a block diagram of a sixth embodiment of the present invention, Fig. 20A showing details of the optical gates of Fig. 20;
Fig. 21 is a timing diagram associated with Fig. 20;
Fig. 22 is a block diagram of a modification of the sixth embodiment of the present invention; and
Figs. 23A and 23B are timing diagrams associated with Fig. 22.

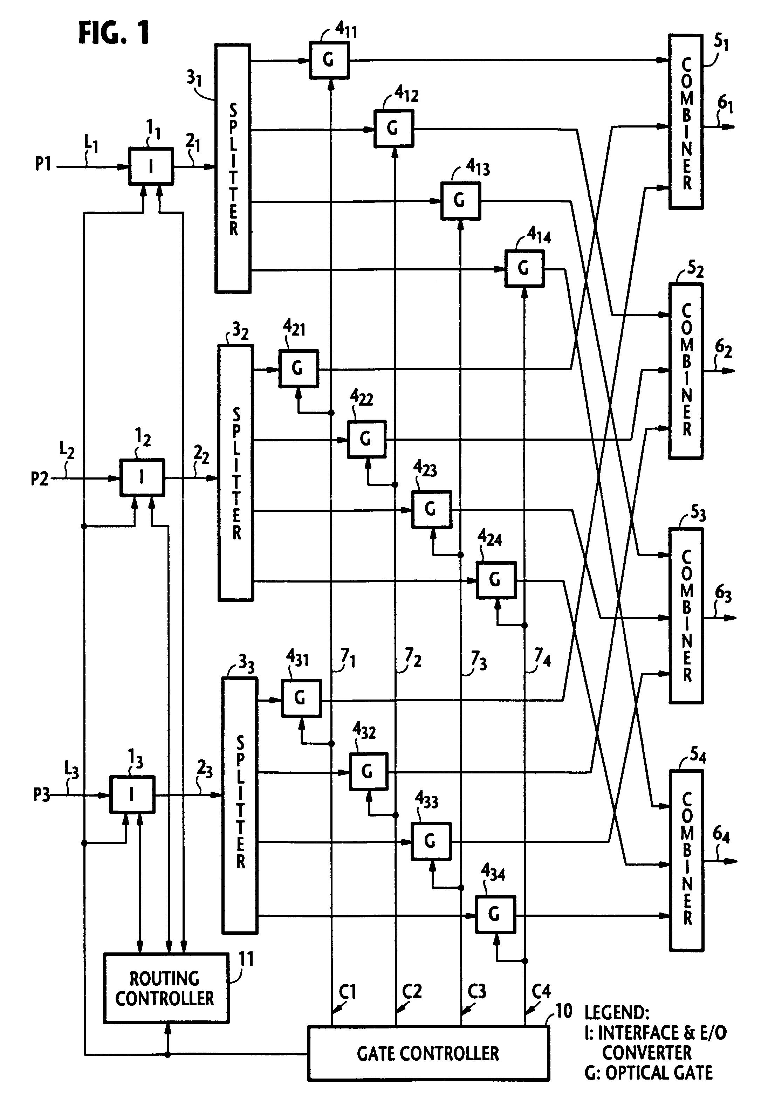

Referring now to Fig. 1, there is shown an optical self-routing network according to a first embodiment of the present invention. For purposes of disclosure, the self-routing network is shown as a 3 x 4 switch configuration. The network has three inlet terminals 2₁, 2₂ and 2₃, three optical splitters 3₁, 3₂, 3₃ respectively coupled to the inlet terminals for splitting a respective optical input into four replicas of the optical input. A 3 x 4 array of optical gates 4₁₁ ∼ 4₃₄ are provided, the gates being horizontally arranged to form three groups of four gates 4ᵢ₁, 4ᵢ₂, 4ᵢ₃ and 4ᵢ₄ (where i = 1, 2 and 3) and vertically arranged to form four sets of three gates 4₁ⱼ, 4₂ⱼ and 4₃ⱼ (where j = 1, 2, 3 and 4). Different groups of optical gates are associated respectively with optical splitters 3₁, 3₂, 3₃, and different sets of the optical gates are associated respectively with optical combiners 5₁, 5₂, 5₃ and 5₄, each of which provides a combined signal of the respective optical inputs. The outputs of combiners 5₁, 5₂, 5₃ and 5₄ are coupled respectively to outlet terminals 6₁, 6₂, 6₃ and 6₄ of the network.

All optical gates are driven by electrical pulses that are supplied from a gate controller 10. The driving pulses have a particular timing and amplitude pattern determined in a manner to be described in detail later.

From user stations, electrical signals in the form of packets are transmitted on access lines L₁, L₂ and L₃ to respective line interface circuits 1₁, 1₂, and 1₃. Overall control of the network is provided by a routing controller 11 which is coupled to line interface circuits 1₁, 1₂, 1₃. Each packet from user stations contains a header followed by a sequence of data bits. Routing controller 11 reads the header information of each incoming packet, assigns one or more pulse positions, or time slots in the header of that packet using amplitude and timing information from gate controller 10, and instructs the associated interface circuit to insert one or more header pulses into the assigned time slots of the packet for routing it to a desired outlet terminal. As will be described, the assignment of time slots is determined in relation to the timing and amplitude patterns of the driving pulses generated by the gate controller 10.

Each of the line interface circuits 1₁, 1₂, 1₃ includes an electro-optical converter. After header pulse insertion, the incoming packets are converted to optical signals to form the inputs to the network and supplied to optical splitters 3₁, 3₂, 3₃ via inlet terminals 2₁, 2₂, 2₃, respectively.

As described in the U.S. patent 5,153,758 and in a paper by I. Ogura et al, titled "A novel optical self-routing switch with a wavelength filtering function using a vertical to surface transmission electro-photonic device" (The 22nd International Conference On Solid-State Devices and Materials, 1990), each of the optical gates 4 is a gate-controlled, heterojunction semiconductor device which is excited when optical energy incident thereon timely coincides with a short-duration, high triggering potential at the gate and remains excited by a long-duration, low bias potential that follows. During this excited state, the incident optical energy is allowed to pass through the device.

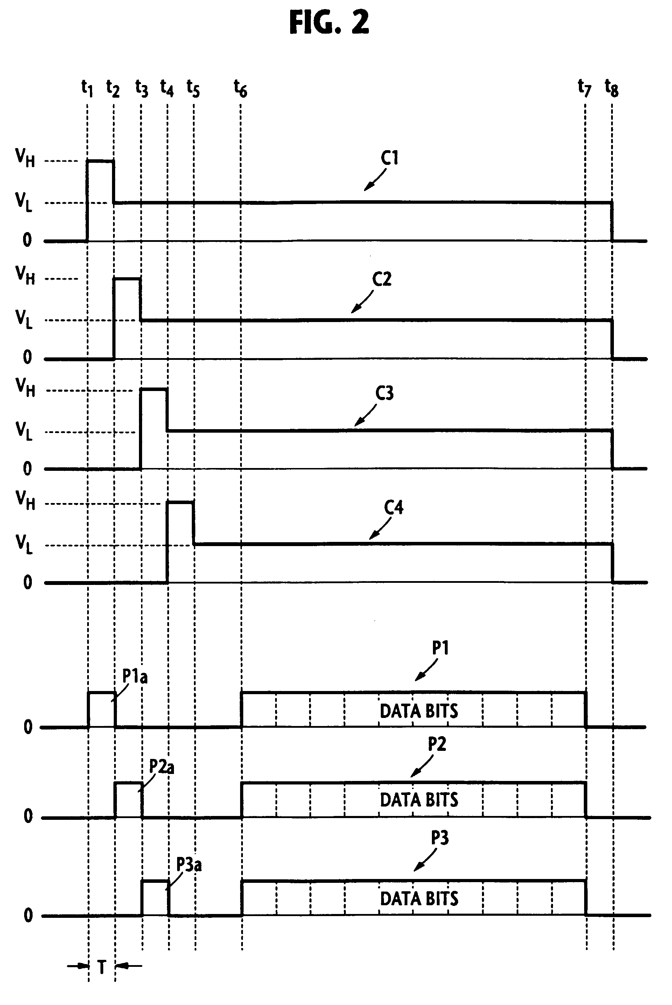

As shown in Fig. 2, gate controller 10 generates control voltage pulses C1, C2, C3 and C4, each having a high triggering voltage V_{H} of duration T that exists anywhere between times t₁ and t₅ and a trailing, low bias voltage V_{L} that exists until time t₈. Control pulses C1, C2, C3 and C4 are respectively applied to conductors 7₁, 7₂, 7₃ and 7₄ that lead to the optical gates 4ᵢ₁, 4ᵢ₂, 4ᵢ₃ and 4ᵢ₄, respectively, wherein i = 1, 2 and 3, as shown in Fig. 1. It is assumed that incoming optical packets P1, P2 and P3 appear at inlet terminals 2₁, 2₂ and 2₃, respectively. If the destinations of packets P1, P2 and P3 are such that they should be routed to outlet terminals 6₁, 6₂ and 6₃, respectively, then header pulses P1a, P2a and P3a are respectively inserted by interface circuits 1₁, 1₂ and 1₃ into time slots (or header slots) t₁-t₂, t₂-t₃ and t₃-t₄ of optical packets P1, P2 and P3. In this way, header pulses P1a, P2a and P3a respectively coincide with the triggering voltages V_{H} of control pulses C1, C2 and C3. Note that data bits of each optical packet occupy the same interval between times t₆ and t₇.

In response to the coincidence between the triggering voltage V_{H} of pulse C1 and header pulse P1a, optical gate 4₁₁ changes to an excited state and maintains it under the influence of the trailing bias voltage V_{L}. Thus, optical packet P1 is allowed to pass through gate 4₁₁ to optical combiner 5₁ and appears at outlet terminal 6₁. Likewise, the coincidence between the triggering voltage V_{H} of pulse C2 and header pulse P2a causes optical gate 4₂₂ to be excited, allowing optical packet P2 to be routed to outlet terminal 6₂ and the coincidence between the triggering voltage V_{H} of pulse C3 and header pulse P3a causes optical gate 4₃₃ to be excited, allowing packet P3 to be routed to outlet terminal 6₃. It is seen that if any of these packets is destined to outlet terminal 6₄, a header pulse will be inserted to time slot t₄-t₅ of the packet. In this way, an optical input to any one of splitters 3₁, 3₂, 3₃ can be routed through the network to any one of outlet terminals 6₁, 6₂, 6₃ and 6₄ by controlling the position of header pulses.

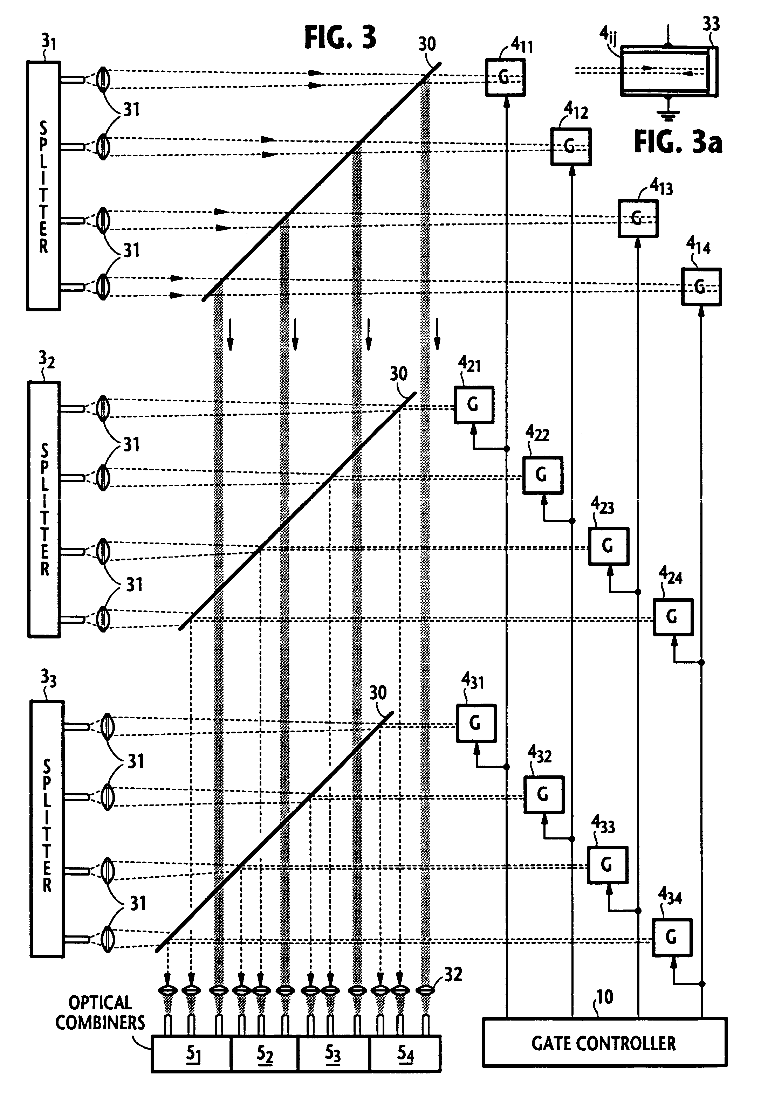

A flexible arrangement of the self-routing network can be implemented by a modified form of the invention as shown in Fig. 3. In this modification, half-silvered mirrors 30 are positioned between optical splitters 3₁, 3₂, 3₃ and the optical gate array, and an array of optical lenses 31 are disposed on the outputs of splitters 3₁, 3₂ and 3₃ to direct their output light beams through the half-silvered mirrors to the associated optical gates. Optical lenses 32 are disposed on the input ends of combiners 5₁, 5₂, 5₃ and 5₄ to focus incident light beams to the combiners. Each optical gate 4ᵢⱼ is provided with a reflecting mirror 33 at one end of the device remote from the associated optical splitters as shown in Fig. 3a. When each of the optical gates is excited, the light incident thereon is reflected off the wall 33 to the half-silvered mirror through which it has passed and where it bends its course at right angles to a corresponding one of lenses 32.

Due to possible timing inaccuracies, two or more header pulses may occur during the period of the same triggering voltage. In such situations, collision occurs at the inputs of an optical combiner to which the packets are destined. The following embodiments overcome this data collision problem.

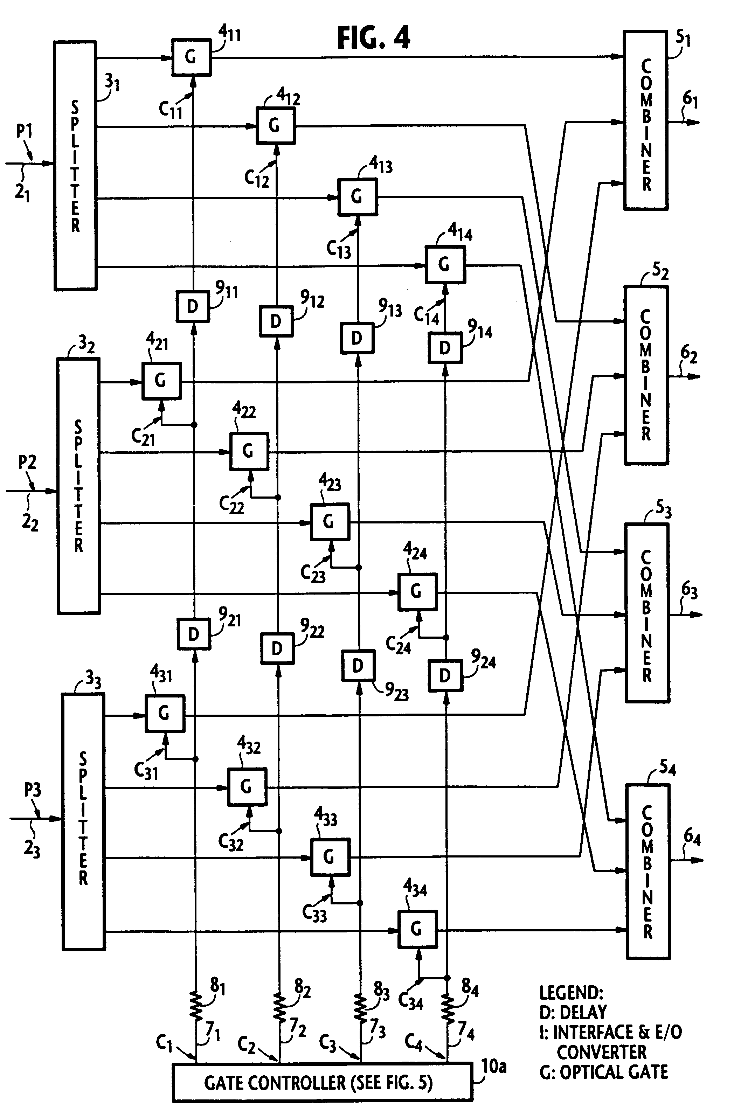

A second embodiment of this invention is shown in Fig. 4 which differs from the Fig. 1 embodiment by the inclusion of a series-connected resistor-delay circuit in each of the gate control lines 7ⱼ (where j = 1, 2, 3 and 4) that extend from gate controller 10a to optical gates 4ᵢⱼ. Each control line 7ⱼ Includes a resistor 8ⱼ and delay elements 9₁ⱼ and 9₂ⱼ, with the circuit junction between resistor 8₁ and delay element 9₂ⱼ being connected to optical gate 4₃ⱼ and the junction between delay elements 9₂ⱼ and 9₁ⱼ being connected to optical gate 4₂ⱼ. Gate control pulses Cⱼ are successively generated at intervals T equal to the duration of the header pulse, and delayed by delay elements 9₂ⱼ and 9₁ⱼ to successively produce delayed control pulses Cᵢⱼ.

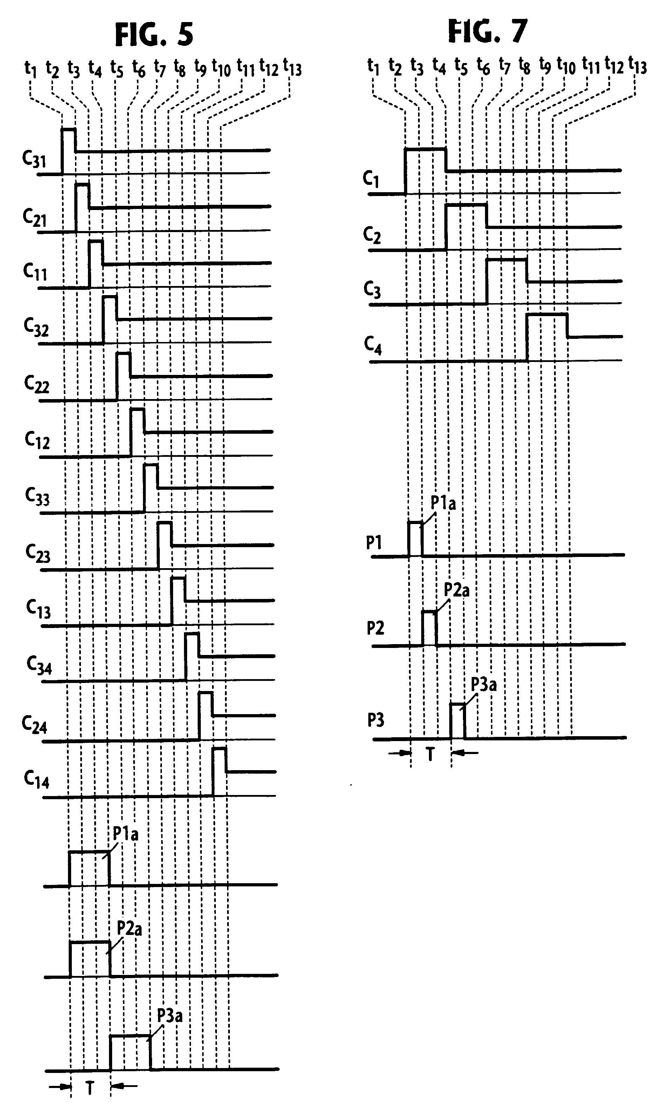

As shown in Fig. 5, each of the delay elements 9 introduces a delay time that is one-third of the duration T of the header pulse, and the duration of the triggering voltage of each control pulse is equal to the delay time T/3. In this way, optical gates 4₃ⱼ, 4₂ⱼ and 4₁ⱼ are supplied with successively shifted control pulses C₃ⱼ, C₂ⱼ and C₁ⱼ, respectively. Therefore, each optical gate of the network of Fig. 4 has a unique triggering instant, and the header pulse of each packet successively coincides with the triggering voltage of a sequence of three control pulses.

Due to the provision of the resistor 8ⱼ in each column "j" of the gate array, excitation of one of the optical gates of a given column causes a voltage drop to occur across the resistor. As a result when one of the gates of a given column is excited, the voltages applied to the other gates of the column located downstream of the excited gate are not excited even if their triggering voltages coincide with a header pulse.

Assume that packets P1 and P2 on inlet terminals 2₁ and 2₂ are destined to outlet terminal 6₁ and packet P3 is destined to outlet terminal 6₂. In order for packets P1 and P2 to arrive at outlet terminal 6₁ and for packet P3 to arrive at terminal 6₂, it is necessary that header pulses P1a and P2a should coincide with control pulses C₁₁ and C₂₁, respectively, and header pulse P3a should coincide with control pulse C₃₂ as seen from Fig. 4. Therefore, header pulses P1a and P2a are inserted to the same interval t₁-t₄, and header pulse P3a is inserted to an interval t₄-t₇ as shown in Fig. 5. If this condition occurs, a coincidence occurs in gate 4₂₁ between header pulse P2a and the triggering voltage of pulse C₂₁ earlier than a coincidence that occurs in gate 4₁₁ between header pulse P2a and the triggering voltage of pulse C₁₁, generating a voltage drop across resistor 8₁ immediately following the excitation of gate 4₂₁. Because of the voltage drop, the voltage at the gate 4₁₁ is too low for it to be excited, while gate 4₂₁ remains in the excited state Packet P2 is thus allowed to pass through gate 4₂₁ to outlet terminal 6₁ while packet P1 is prevented from passing through gate 4₁₁. On the other hand, header pulse P3a coincides with the triggering voltage of pulse C₃₂, allowing gate 4₃₂ to transmit packet P3 to outlet terminal 6₂. Although not shown in the drawing, some provision will be made in the network so that the fact that packet P1 is corrupted as a result of a contention is communicated to the originating user for retransmission of a copy of the packet. It is seen that to avoid collision between packets P1, P2 and P3 it is necessary that the header pulse of each packet exist in one of four discrete time intervals t₁-t₄, t₄-t₇, t₇-t₁₀ and t₁₀-t₁₃.

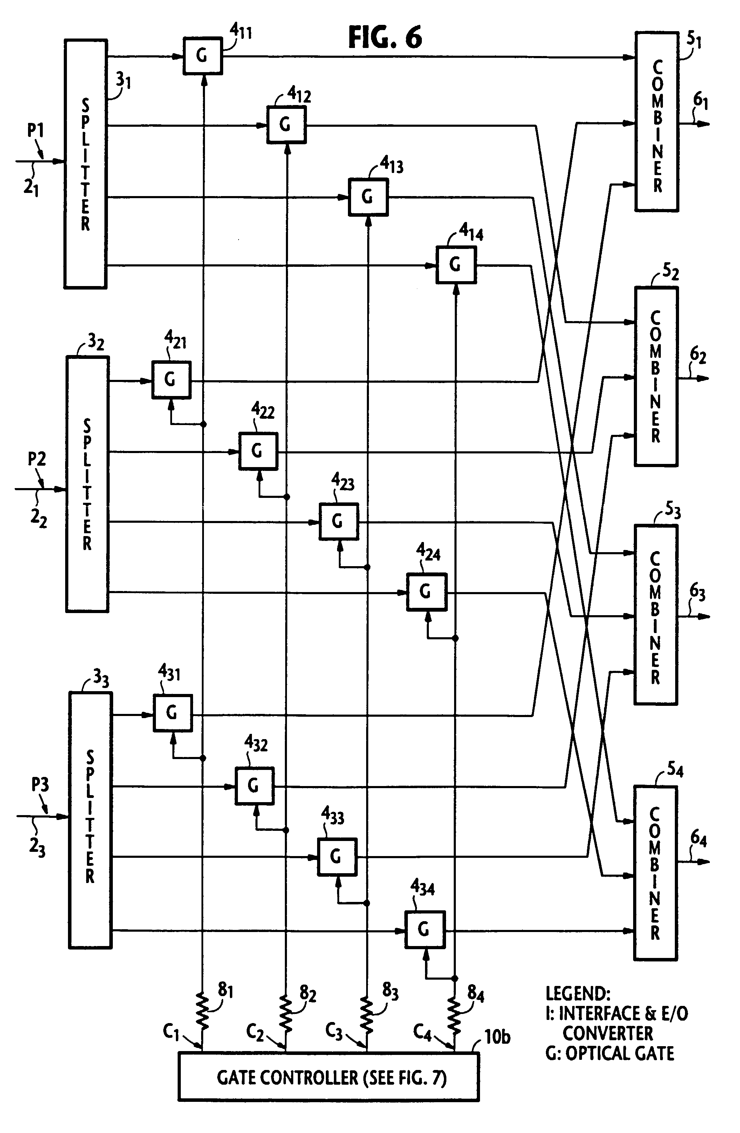

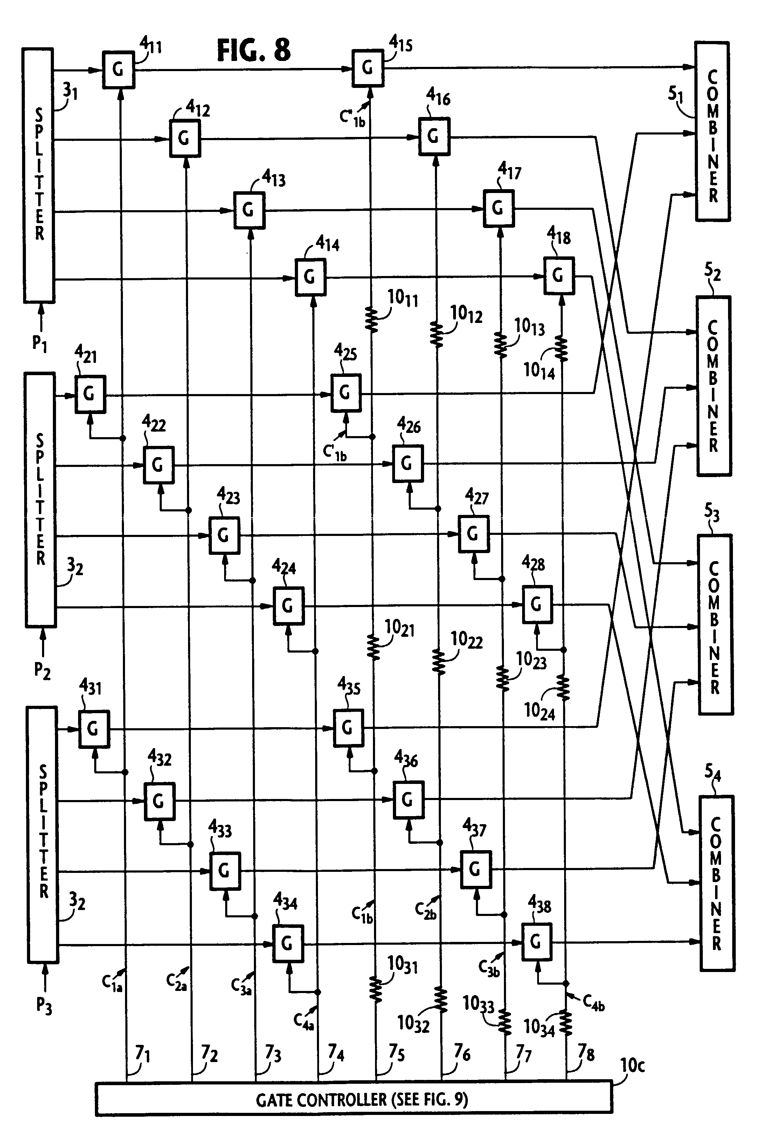

Returning briefly to Fig. 2, if the triggering voltage of control pulse C₁ is delayed slightly with respect to its correct position, the successive header pulses P1a and P2a would sequentially coincide with it. This would result in a collision between packets P1 and P2 at optical gates 4₁₁ and 4₂₁. Such a collision is avoided by an embodiment shown in Fig. 6. The embodiment of Fig. 6 is implemented by modifying the embodiment of Fig. 4 in which all delay elements of Fig. 4 are removed from the gate array, directly coupling the voltage-dropping resistors to the associated optical gates. As shown in Fig. 7, this embodiment differs from the Fig. 4 embodiment in that the triggering voltage of each control pulse Cⱼ has a duration T, applying the same control pulse to the gates of the same column, and the header pulse of each optical packet has one-third of the duration T. Control pulses C₁, C₂, C₃ and C₄ are successively generated at T-intervals.

Assume that control pulse C₁ is delayed so that its triggering high voltage portion successively coincides with headers P1a and P2a (Fig. 2). However due to the fact that the earlier occurrence of header pulse P1a generates a voltage drop across resistor 8₁, the voltage at the gate 4₂₁ is lowered to a level not sufficient to cause it to excite in response to header pulse P2a. Therefore, packet P1 is passed through gate 4₁₁, while packet P2 is blocked at gate 4₂₁. Header pulse P3a is assumed to be assigned a position that coincides with the triggering voltage of control pulse C₂. Gate 4₃₂ is thus excited, allowing packet P3 to be routed to combiner 5₂.

A third embodiment of the present invention is shown in Fig. 8. This embodiment differs from the Fig. 1 embodiment by the inclusion of a fourth group of optical gates 4₁₅ ∼ 4₁₈, a fifth group of optical gates 4₂₅ ∼ 4₂₈, and a sixth group of optical gates 4₃₅ ∼ 4₃₈, with the optical gates of the fourth, fifth and sixth groups being respectively connected to the outputs of the optical gates of the first, second and third groups. Controller 10c drives the optical gates of the fourth, fifth and sixth groups through control lines 7₅ ∼ 7₈ (=7ⱼ₊₄, where j = 1, 2, 3 and 4) extending to optical gates 4₁₅ ∼ 4₁₈. Each of control lines 7ⱼ₊₄ includes series-connected resistors 10₁ⱼ, 10₂ⱼ and 10₃ⱼ with the junction between resistors 10₁ⱼ and 10₂ⱼ being connected to optical gates 4₂₍ⱼ₊₄₎ and the junction between resistors 10₂ⱼ and 10₃ⱼ being connected to optical gates 4₃₍ⱼ₊₄₎. The outputs of optical gates 4ᵢ₍ⱼ₊₄₎ are connected to the i*th* inputs of combiners 5ⱼ.

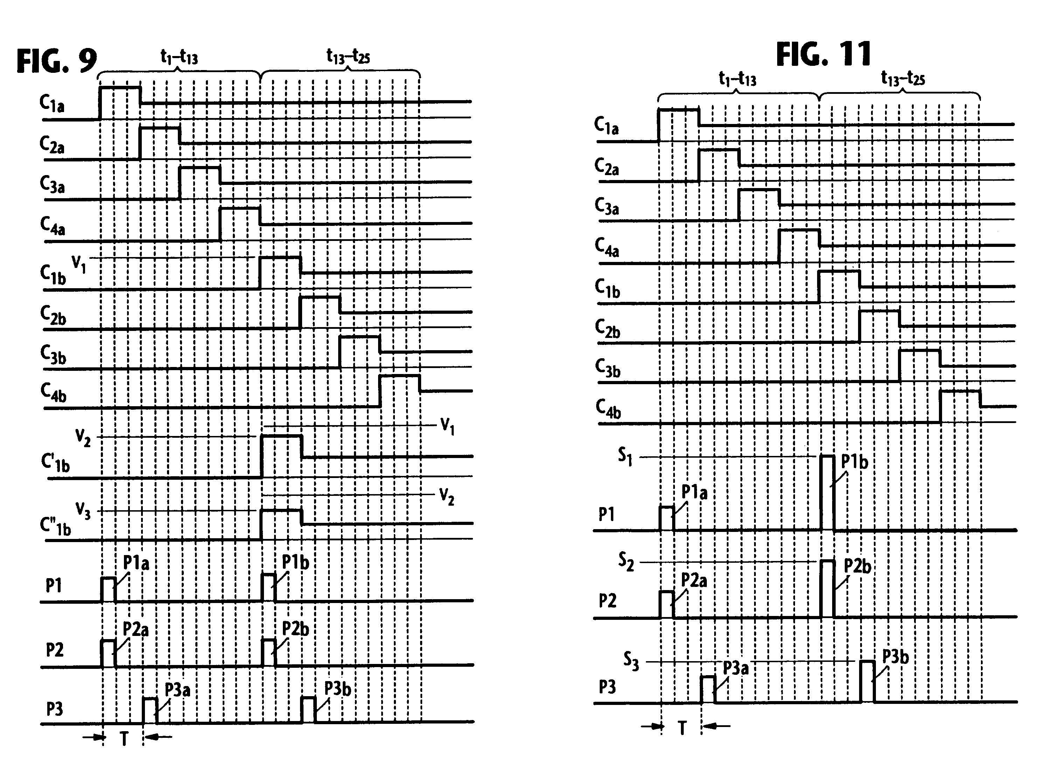

Controller 10c successively applies control pulses C₁ₐ, C₂ₐ, C₃ₐ and C₄ₐ to lines 7₁ ∼ 7₄, respectively, during a first interval between times t₁ and t₁₃, and successively applies additional control pulses to lines 7₅ ∼ 7₈ during a second interval between times t₁₃ and t₂₅. These additional pulses are indicated by waveforms C_{1b}, C_{2b}, C_{3b} and C_{4b} in Fig. 9 after experiencing a voltage drop by resistors 10₃₁, 10₃₂, 10₃₃ and 10₃₄. The triggering voltage of each of these control pulses has a duration T and the header pulse of each packet has one-third of the duration T as in the Fig. 7 embodiment. The triggering voltage of pulses C_{1b}, C_{2b}, C_{3b} and C_{4b} on control lines 7₅ ∼ 7₈ has a voltage level V₁ after experiencing the voltage drop by resistors 10₃₁, 10₃₂, 10₃₃ and 10₃₄. When one of the optical gates connected to the same control line is excited, the voltage at the junction of resistors 10₃ⱼ and 10₂ⱼ drops to a lower level V₂ and the voltage at the junction of resistors 10₂ⱼ and 10₁ⱼ drops to a lowest level V₃. The optical gate whose triggering voltage is higher than any of the other gates of the same control line is given priority. Thus, if contention arises in any of the fourth, fifth and sixth groups of optical gates, only one packet is selected by the gate having priority. To achieve the priority selection, each optical packet has a second header pulse "b" which is spaced from the first header pulse "a" by an interval equal to 4T.

Assume that the header pulses P1a and P1b of optical packet P1 are inserted respectively to time slots t₁∼t₂ and t₁₃∼t₁₄ and the header pulses P2a and P3a of packet P2 occur in the same time slots. The header pulses P3a, P3b of packet P3 are assumed to be inserted to positions t₄∼t₅ and t₁₆∼t₁₇. Since header pulses P1a and P2a coincide with the triggering voltage of control pulse C₁ₐ, optical gates 4₁₁ and 4₂₁ are simulaneously excited, allowing packets P1 and P2 to be forwarded to optical gates 4₁₅ and 4₂₅, respectively, while header pulse P3a excites gate 4₃₂ upon coincidence with the triggering voltage of control pulse C₂ₐ, thus applying packet P3 to gate 4₃₆. Header pulse P1b coincides with the triggering voltage of control pulse C"_{1b} that is applied to gate 4₁₅, and header pulse P2b coincides with the triggering voltage of control pulse C'_{1b} that is applied to gate 4₂₅. Therefore, the triggering voltage at gate 4₂₅ reduces to lower level V₂, while the voltage at gate 4₁₅ reduces to lowest level V₃ as indicated in Fig. 9, giving priority to gate 4₂₅ in passing packet P2 to combiner 5₁. Header pulse P3b then coincides with the triggering voltage of control pulse C_{2b} at gate 4₃₆, and packet P3 is passed through it to combiner 5₂.

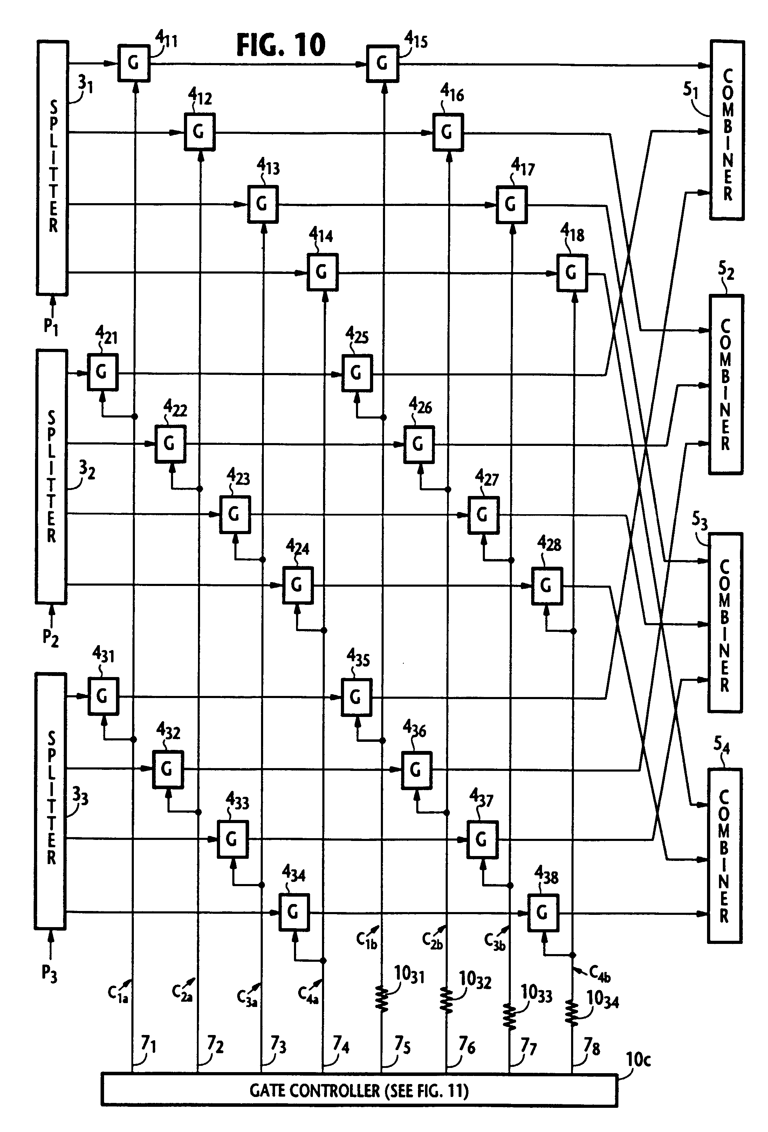

A modified embodiment of Fig. 8 is shown in Fig. 10 which differs from it by the exclusion of resistors 10₁ⱼ and 10₂ⱼ from the control lines 7₍ⱼ₊₄₎ and by the use of second header pulses having different light intensities S₁, S₂ and S₃ as shown in Fig. 11, with the light intensities having a relationship S₁ > S₂ > S₃. Assume that all header pulses of packets P1, P2 and P3 are inserted to the same time slots as in the Fig. 8 embodiment and that their second header pulses P1b, P2b and P3b have light intensities S₁, S₂ and S₃, respectively. In the same manner as described in the previous embodiment, packets P1, P2 and P3 are passed through optical gates and 4₁₁, 4₂₁ and 4₃₂, respectively, when their first header pulses P₁ₐ, P₂ₐ, P₃ₐ coincide with control pulses C₁ₐ and C₂ₐ and directed to optical gates 4₁₅, 4₂₅, and 4₃₆, respectively. Because of the highest light intensity, of header pulse P1b, coincidence between header pulse P1a and control pulse C_{1b} causes gate 4₁₅ to draw a greater current for excitation than the current drawn by gate 4₂₅. A sharp voltage drop thus develops across resistor 10₃₁, preventing gate 4₂₅ from being excited. Thus, packet P1 is given priority over contending packet P2, while packet P3 is allowed to pass through gate 4₃₆ to combiner 5₂ without contention in response to its second header pulse coinciding with control pulse C_{2b}.

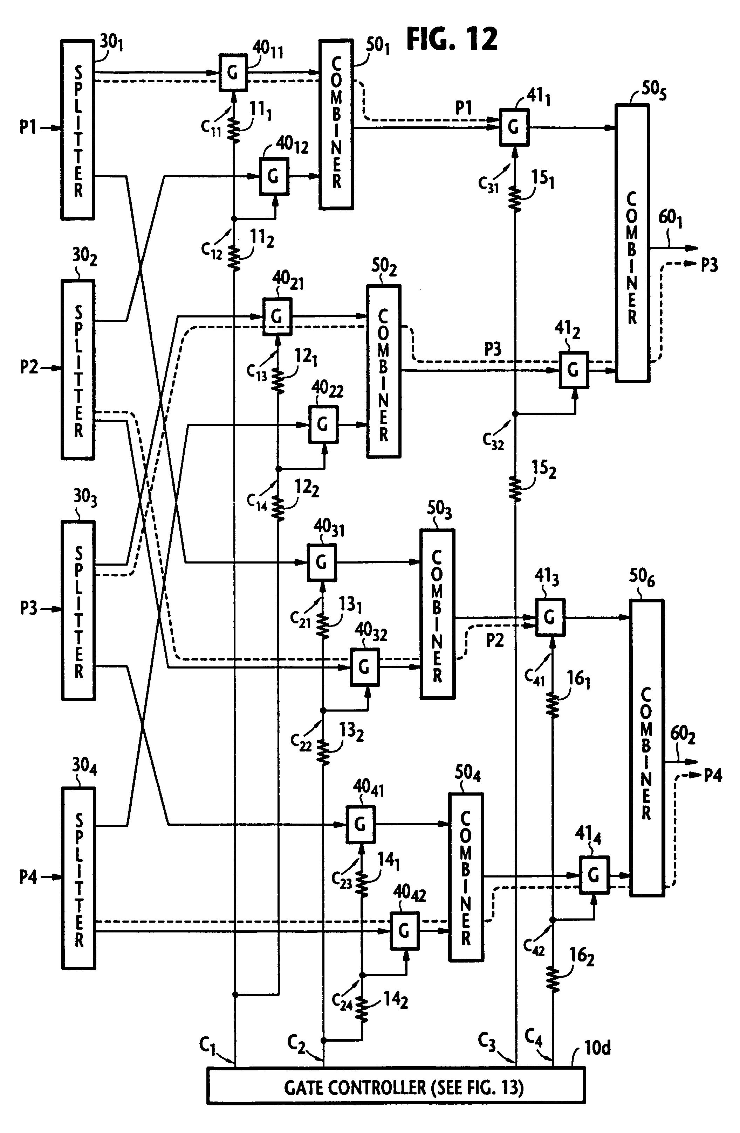

A fourth embodiment of this invention is shown in Fig. 12 as a 4 x 2 switch configuration. Four optical splitters 3₁ ∼ 3₄, each having two outputs, are provided to receive incoming optical packets P1, P2, P3 and P4, respectively. Optical gates 40₁ₙ (where n = 1 and 2) have their inputs coupled respectively to the first (upper) outputs of splitters 30₁ and 30₂, and optical gates 40₂ₙ have their inputs coupled respectively to the first outputs of splitters 30₃ and 30₄. Similarly, optical gates 40₃ₙ have their inputs coupled respectively to the second (lower) outputs of splitters 30₁ and 30₂, and optical gates 40₄ₙ have their inputs coupled respectively to the second outputs of splitters 30₃ and 30₄. Optical combiners 50ₘ (where m = 1, 2, 3 and 4) are associated respectively with optical gates 40ₘₙ. Each combiner 50ₘ has two inputs which are connected to the outputs of the associated optical gates 4ₘₙ. The outputs of combiners 50ₘ are connected respectively to optical gates 41ₘ. The outputs of gates 41₁ and 41₂ are respectively coupled by optical combiner 50₅ to outlet terminal 60₁, those of gates 41₃, and 41₄ being coupled by combiner 50₆ to outlet terminal 60₂.

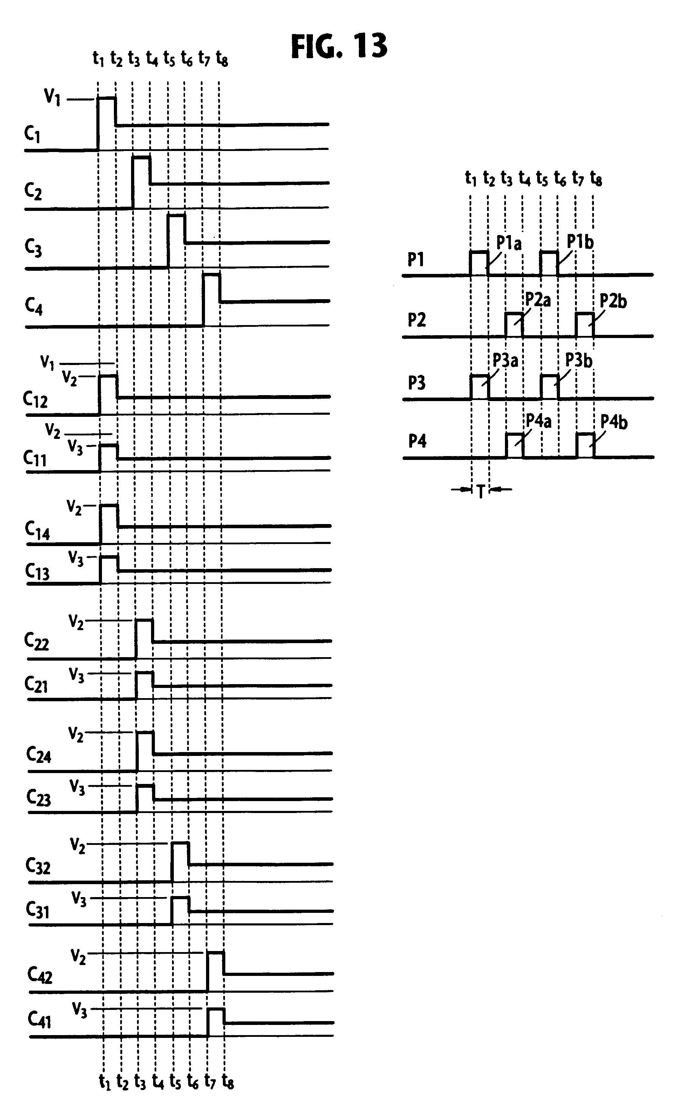

Gate controller 10d generates four control pulses C₁, C₂, C₃ and C₄. Control pulse C₁ is supplied to gate 40₁₁ through resistors 11₂ and 11₁ and to gate 40₁₂ through resistor 11₂, the same pulse being applied to gate 40₂₁ through resistors 12₂ and 12₁ and to gate 40₂₂ through resistor 12₂, thus supplying different voltages C₁₁, C₁₂, C₁₃ and C₁₄ to gates 40₁₁, 40₁₂, 40₂₁ and 40₂₂, respectively. Likewise, control pulse C₂ is supplied to gate 40₃₁ through resistors 13₂ and 13₁ and to gate 40₃₂ through resistor 13₂, the same pulse being applied to gate 40₄₁ through resistors 14₂ and 14₁ and to gate 40₄₂ through resistor 14₂, thus supplying different voltages C₂₁, C₂₂, C₂₃ and C₂₄ to gates 40₃₁, 40₃₂, 40₄₁ and 40₄₂, respectively. In like manner, control pulse C₃ is applied to gate 41₁ through resistors 15₂ and 15₁ and to gate 41₂ through resistor 15₂, and control pulse C₄ is applied to gate 41₃ through resistors 16₂ and 16₁ and to gate 41₂ through resistor 16₂, thus supplying different voltages C_{31,} C_{32,} C₄₁ and C₄₂ to gates 41₁, 41₂, 41₃ and 41₄, respectively. It is seen that gates 40₁₂, 40₂₂, 40₃₂, 40₄₂, 41₂ and 41₄ are given priority over their companion gates 40₁₁, 40₂₁, 40₃₂, 40₄₁, 41₁ and 41₃, when coincidence occurs between incoming header pulses and their gate control pulses. The self-routing network of this configuration can be said to operate on a successive "tournament" basis as will be understood with reference to Fig. 13.

As shown in Fig. 13, the triggering voltage of each control pulse has a duration T equal to the duration of each header pulse. Timing margins are provided between the leading edges of successive gate control pulses. For purposes of clarity, the timing margins are set equal to the duration T. Assume that a contention is likely to occur between the header pulses P1b and P3b of packets P1 and P3 and between the header pulses P2b and P4b of packets P2 and P4.

The header pulse P1a of packet P1 coincides with control pulse C₁₁ at gate 40₁₁ without contention with gate 40₁₂, allowing the packet to be routed through combiner 50₁ to output gate 41₁, while the header pulse P3a of packet P3 coincides with control pulse C₁₃ at gate 40₂₁ without contention with gate 40₂₂, routing the packet through combiner 50₂ to output gate 41₂. In like manner, the header pulse P2a of packet P2 coincides with control pulse C₂₂ at gate 40₃₂ without contention with gate 40₃₁, allowing the packet to be routed through combiner 50₃ to output gate 41₃, while the header pulse P4a of packet P4 coincides with control pulse C₂₄ at gate 40₄₂ without contention with gate 40₄₁, routing the packet through combiner 50₄ to output gate 41₄.

Contention occurs between the header pulses P1b and P3b at gates 41₁ and 41₂ as they are simultaneously supplied with the triggering voltages of control pulses C₃₁ and C₃₂. Since control pulse C₃₂ has a higher triggering voltage than control pulse C₃₁, gate 41₂ is the winner of the contention, passing packet P3 through combiner 50₅ to outlet terminal 60₁. Similar situation occurs between the header pulses P2b and P4b at gates 41₃ and 41₄ as they are simultaneously supplied with the triggering voltages of control pulses C₄₁ and C₄₂. Because of the higher triggering voltage, gate 41₄ is the winner of the contention for transmitting packet P4 to outlet terminal 60₂. If contention occurs between input gates 40ᵢ₁ and 40ᵢ₂ (where i = 1, 2, 3, 4), gate 40ᵢ₂ is always the winner by virtue of their higher triggering voltage.

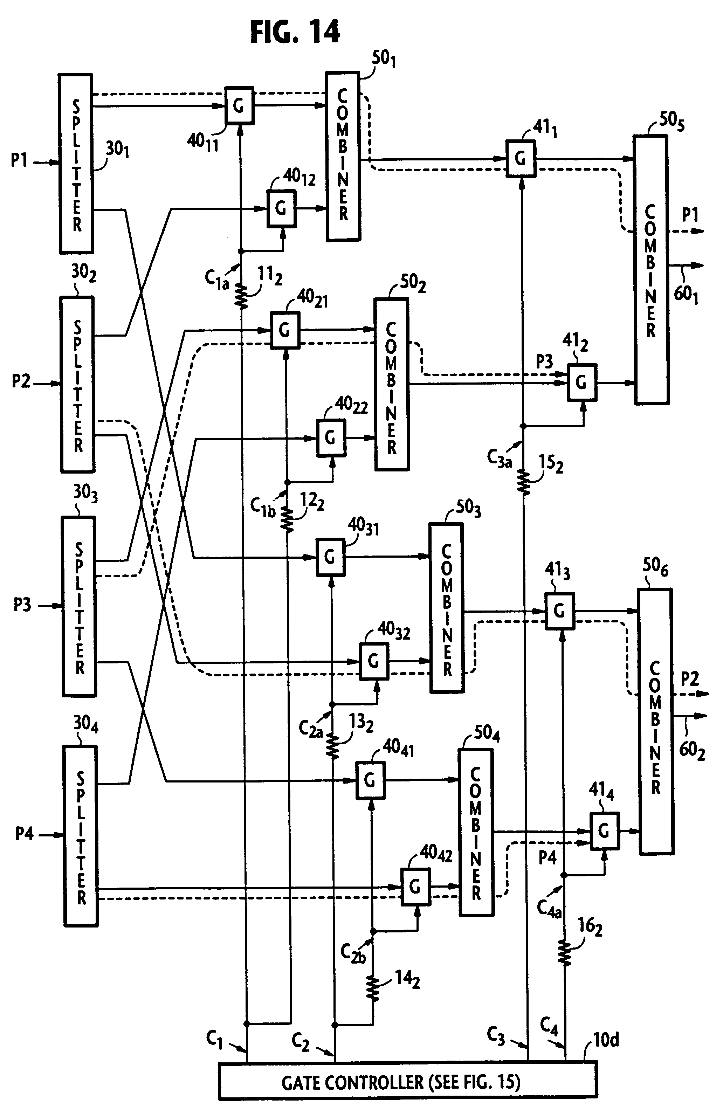

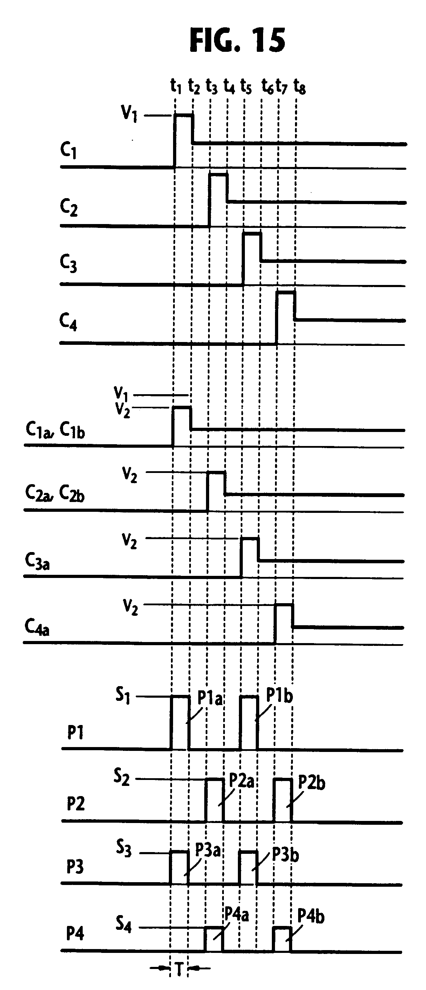

An embodiment shown in Fig. 14 is a modification of the embodiment of Fig. 12, the difference being in the exclusion of resistors 11₁, 12₁, 13₁, 14₁, 15₁ and 16₁ so that equal triggering voltages (C₁ₐ, C_{1b}, C₂ₐ, C_{2b}, C₃ₐ, C₄ₐ) are supplied to the optical gates of contending partners (pairs) and in the generation of header pulses having different light intensities as seen from Fig. 15. As illustrated, the header pulses are assumed to occur in the same time slots as in the case of Fig. 14. As in the previous embodiment, packets P1 and P3 are routed through input gates without contention to output gates 41₁ and 41₂ between which contention arises, and the other packets are routed to output gates 41₃ and 41₄ between which contention arises. The header pulses of packet P1 have the highest light intensity, and those of packets P2, P3 and P4 have decreasing light intensities in the order given. Since header pulses P1b and P2b have a higher light intensity than those of the contending packets, packets routed to output gates 41₁ and 41₃ are the winners of the contentions, so that P1 is passed through combiner 50₅ to outlet terminal 60₁ and P2 is passed through combiner 50₆ to outlet terminal 60₂.

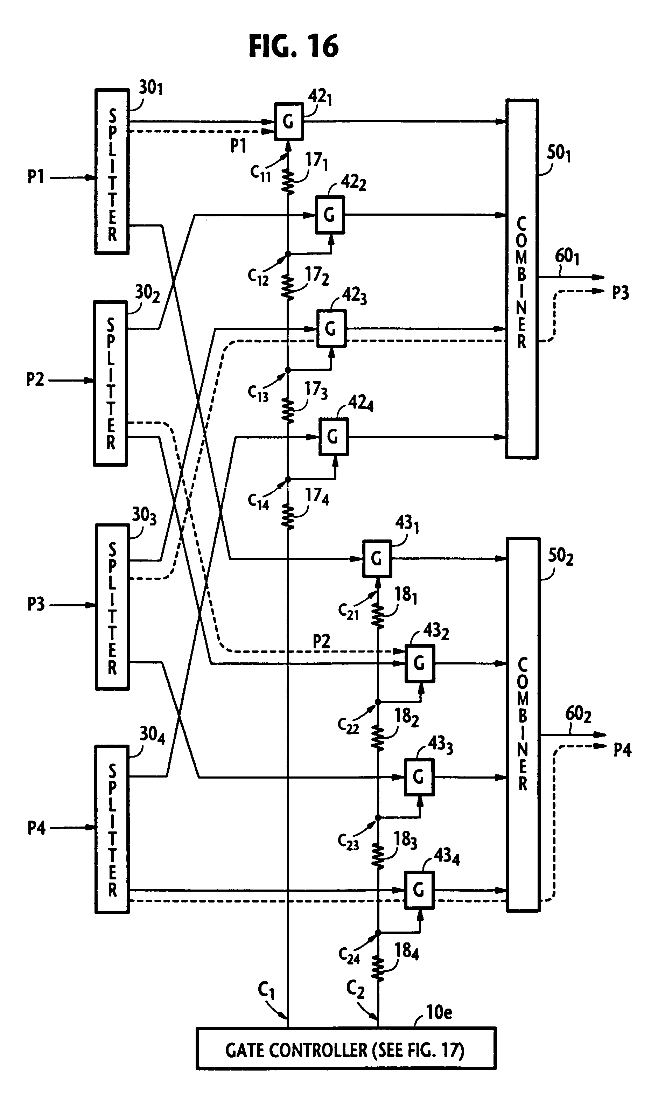

A self-routing network of 4 x 2 switch configuration can also be implemented in a single contention stage for each outlet terminal as shown in Fig. 16. Optical gates 42₁ ∼ 42₄ are coupled respectively to the first outputs of splitters 30₁ ∼ 30₄ for resolving a contention among packets destined to outlet terminal 60₁ through combiner 50₁, and optical gates 43₁ ∼ 43₄ are coupled respectively to the second outputs of splitters 30₁ ∼ 30₄ for resolving a contention among packets that are destined to outlet terminal 60₂ through combiner 50₂. Gate controller 10e supplies a control pulse C₁ through series-connected resistors 17₄, 17₃, 17₂ and 17₁ to develop successively decreasing control voltages C₁₄, C₁₃, C₁₂ and C₁₁ for coupling to gates 42₄, 42₃, 42₂ and 42₁, respectively. Likewise, gate controller 10e further supplies a control pulse C₂ through series-connected resistors 18₄, 18₃, 18₂ and 18₁ to develop successively decreasing control voltages C₂₄, C₂₃, C₂₂ and C₂₁ for coupling to gates 43₄, 43₃, 43₂ and 43₁, respectively.

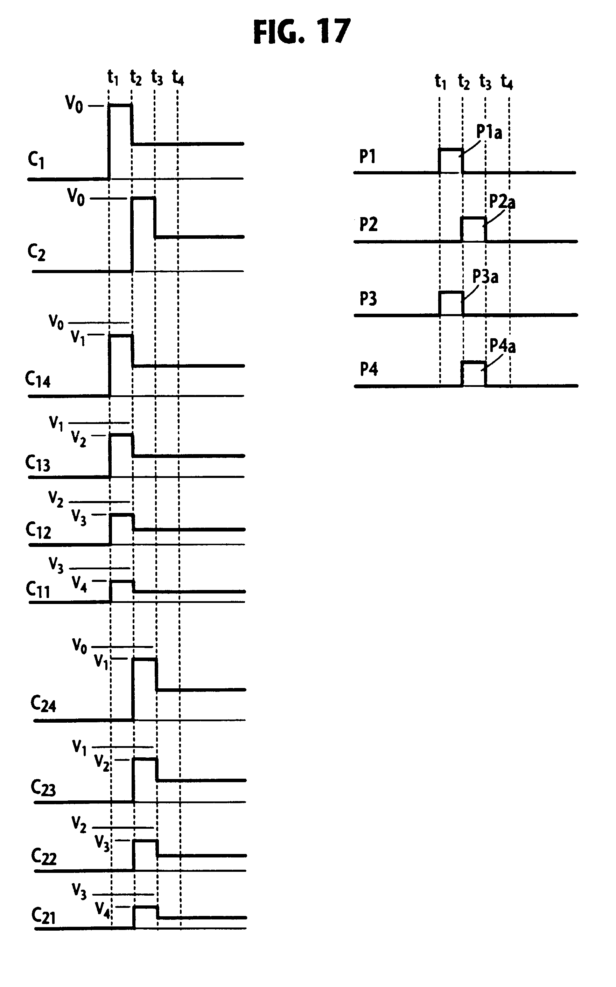

As shown in Fig. 17, each optical packet has a single header pulse. If header pulse P1a and P3a occur in the same time slot t₁-t₂ so that packets P1 and P3 are destined to outlet terminal 60₁, and header pulse P2a and P4a occur in the same time slot t₂-t₃ so that packets P2 and P4 are destined to outlet terminal 60₂, contention occurs at gates 42₁ and 42₃ as well as at gates 43₂ and 43₄ as packets P1 and P3 coincide with control pulses C₁₁ and C₁₃, respectively, and th other packets P2 and P4 coincide with control pulses C₂₂ and C₂₄, respectively. Since gate 42₃ is supplied with a higher triggering voltage than the voltage supplied to gate 42₁, packet P3 wins the race for contention with packet P1. In a similar manner, gate 43₄ is supplied with a higher triggering voltage than the voltage at gate 43₁, packet P4 is the winner.

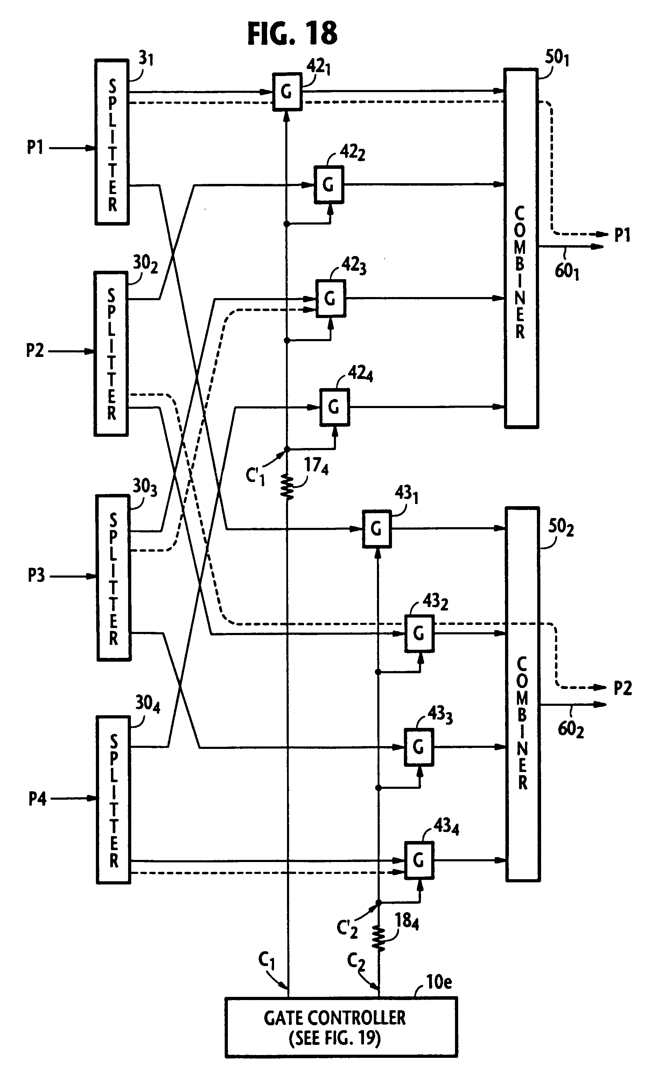

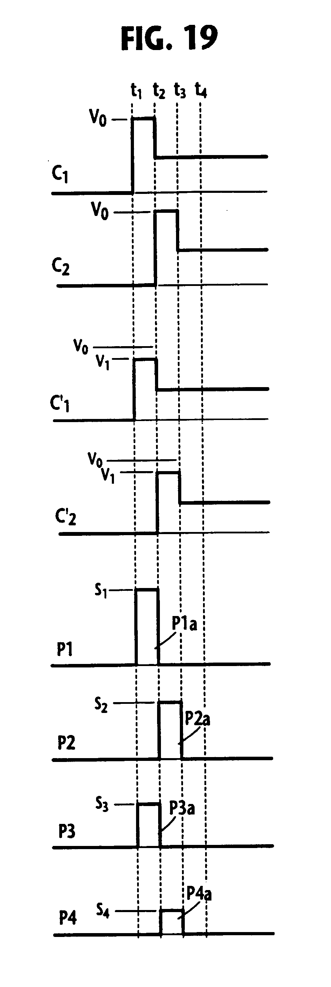

Fig. 18 is a modification of the embodiment of Fig. 16, the difference being in the exclusion of resistors 17₁ ∼ 17₃ and resistors 18₁ ∼ 18₃ so that equal triggering voltages (C'₁ and C'₂) are supplied to the optical gates of contending partners (sets) and in the generation of header pulses having different light intensities as seen from Fig. 19. As illustrated, the header pulses are assumed to occur in the same time slots as in the case of Fig. 17. As in the previous embodiment, packets P1 and P3 are applied to gates 42₁ and 42₃, respectively, and packets P2 and P4 are applied to gates 43₂ and 43₄, respectively. As shown in Fig. 19, the header pulses of packet P1 have the highest light intensity, and those of packets P2, P3 and P4 have decreasing light intensities in the order given. Since header pulses P1b and P2b have a higher light intensity than those of the contending packets, packets P1 and P2 supplied to gates 42₁ and 43₂ are the winners of the race to respective outlet terminals 60₁ and 60₂.

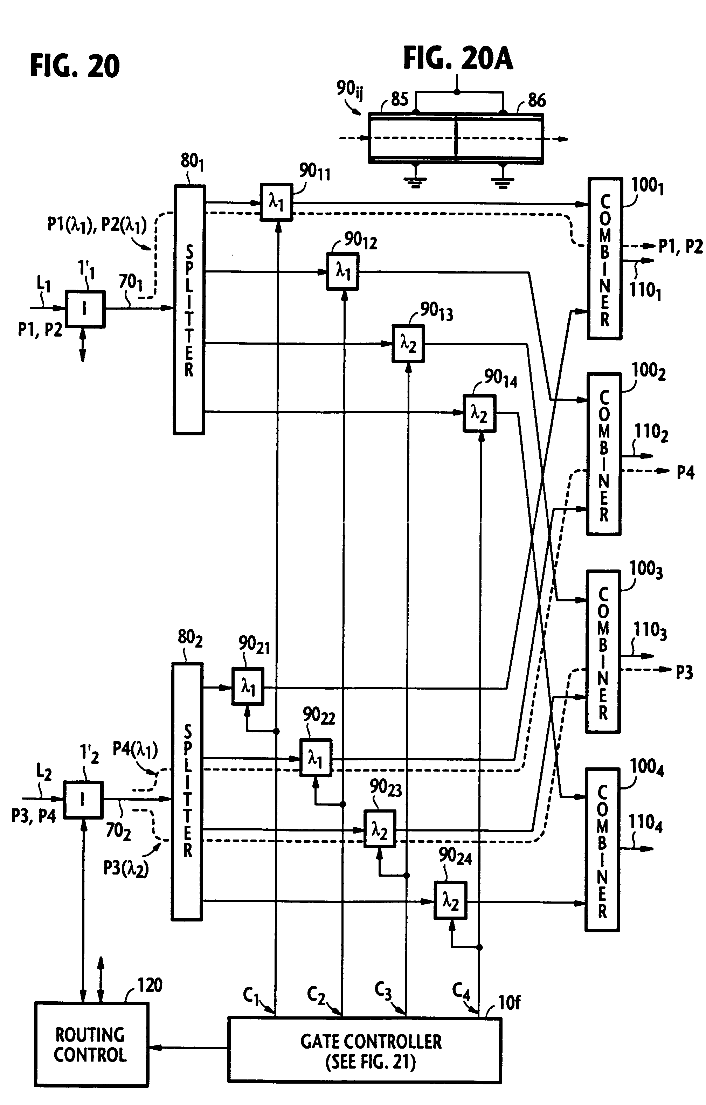

The length of a header increases with the amount of traffic to be carried by the self-routing network. The header length can be conserved by multiplexing optical packets upon different light wavelengths. The wavelength multiplexing concept of this invention for two wavelengths is implemented by a 2 x 4 network configuration as shown In Fig. 20. Electrical packets P1 and P2 from a user station are successively transmitted on access line L₁ and received by line interface 1'₁ and packets P3 and P4 from another user station are successively transmitted on access line L₂ and received by line interface 1'₂. Routing controller 120 is coupled to the line interfaces, determines a wavelength and a header time slot according to the information contained in a packet received from the associated interface in relation to the timing and amplitude pattern of the gate control pulses supplied from gate controller 10f, and instructs the interface to carry the packet on the determined wavelength and insert a header pulse Into the determined time slot. For purposes of illustration, packets P1 and P2 are converted by line interface 1'₁ to optical signals of wavelength λ₁, and packets P3 and P4 are converted by line interface l'₂ to optical signals of wavelengths λ₂ and λ₁, respectively. The outputs of interfaces 1'₁ and 1'₂ are connected respectively by light waveguides 70₁ and 70₂ to optical splitters 80₁ and 80₂, each having four outputs. Optical gates 90₁₁, 90₁₂, 90₁₃ and 90₁₄ are connected respectively to the outputs of splitter 80₁, and gates 90₁₁ and 90₁₂ are tuned to wavelength λ₁, and gates 90₁₃ and 90₁₄ are tuned to wavelength λ₂. Optical gates 90₂₁, 90₂₂, 90₂₃ and 90₂₄ are likewise connected to the outputs of splitter 80₂, with gates 90₂₁ and 90₂₂ being tuned to wavelength λ₁ and gates 90₂₃ and 90₂₄ being tuned to wavelength λ₂. The outputs of gates 90₁ⱼ(j=1, 2, 3, 4) are connected respectively to the first inputs of combiners 100ⱼ and the outputs of gates 90₂ⱼ are connected to the second inputs of combiners 100ⱼ. Gate controller 10f supplies control pulses C₁ to C₂ to gates 90ᵢ₁ and 90ᵢ₂ (i = 1, 2) and control pulses C₃ to C₄ to gates 90ᵢ₃ and 90ᵢ₄.

As shown in Fig. 20A, each of the optical gates 90ᵢⱼ is preferably constructed of a narrow-band wavelength tunable optical element 85 and a wide-band wavelength tunable optical element 86 coupled together and arranged in the path of incident light beam.

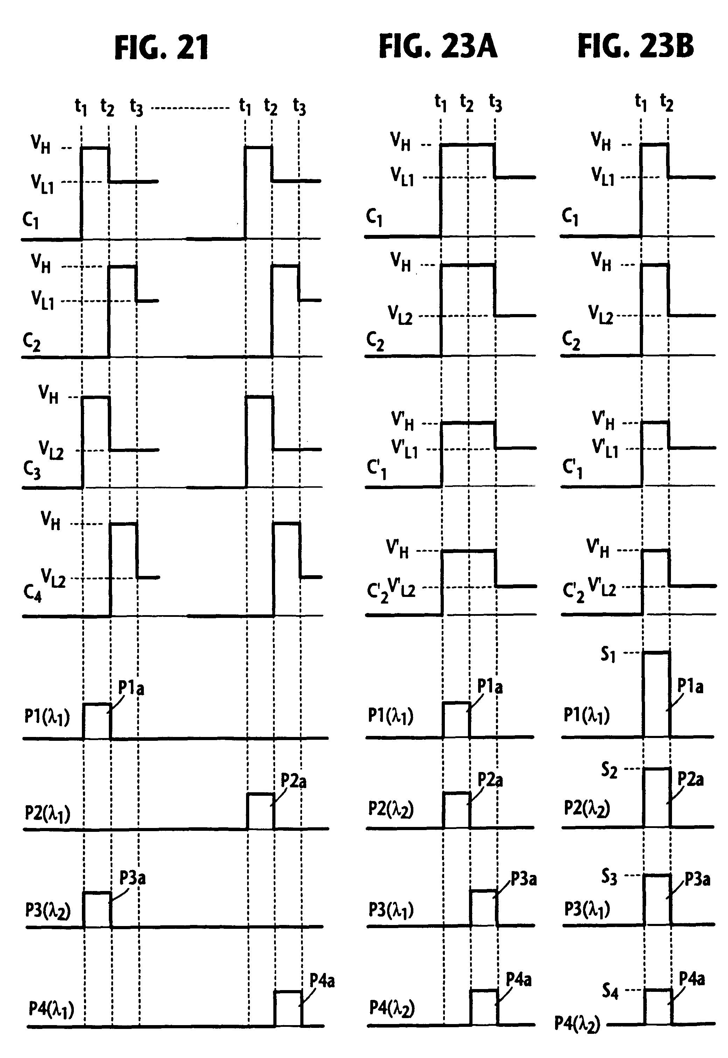

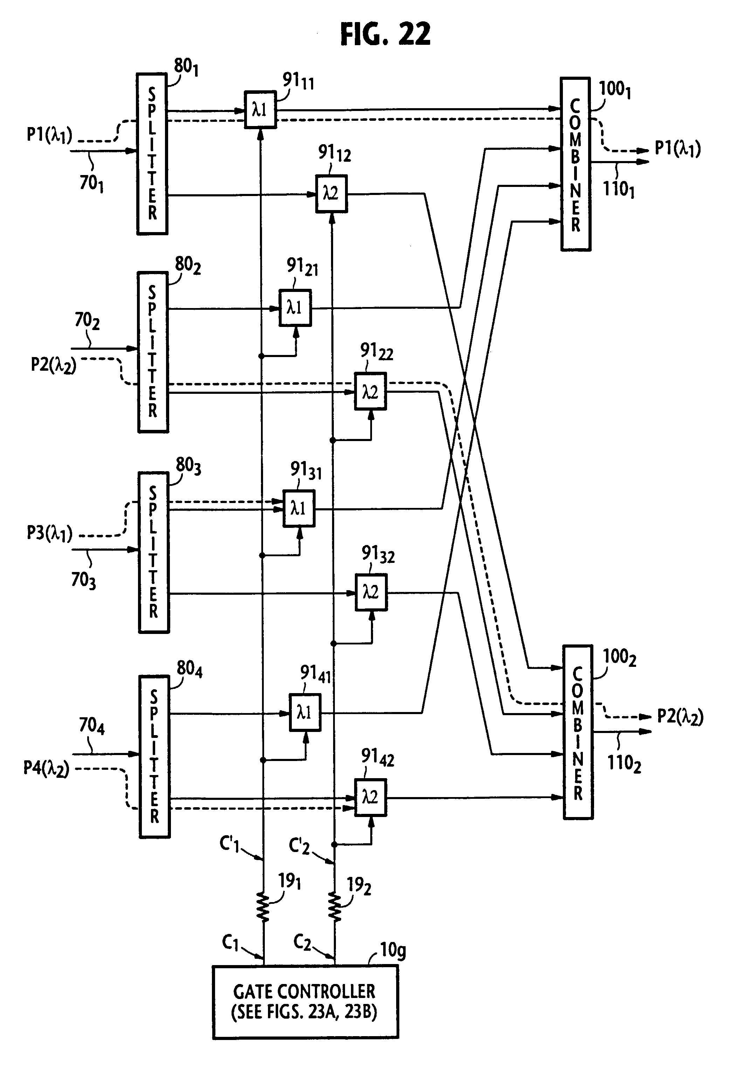

As illustrated in Fig. 21, the triggering voltages of all control pulses C₁ ∼ C₄ have equal amplitude V_{H} for gate excitation, with the triggering voltages of pulses C₁ and C₃ having an equal time slot t₁-t₂ and those of pulses C₂ and C₄ having an equal time slot t₂-t₃. According to different wavelengths, control pulses C₁ and C₂ have a trailing voltage V_{L1} for tuning to wavelength λ₁, while the trailing voltage of pulses C₃ and C₄ is set equal to V_{L2} for tuning to wavelength λ₂.

Assume that header pulses P1a and P2a for packets P1(λ₁) and P2(λ₁) are inserted into the same time slot t₁-t₂ of successive headers and the header pulse P3a of packet P3(λ₂) is inserted to the time slot t₁-t₂ of an initial header. The header pulse P4a of packet P4(λ₁) is assumed to be inserted to the time slot t₂-t₃ of a subsequent header.

It is seen that header pulses P1a and P2a successively coincide with control pulse C₁ at gate 90₁₁, so packets P1(λ₁) and P2(λ₁) are routed to on outlet terminal 110₁ via combiner 100₁. Header pulse P3a coincides with control pulse C₃ at gate 90₂₃, allowing packet P3(λ₂) to be routed to outlet terminal 110₃ via combiner 100₃. In like manner, header pulse P4a coincides with control pulse C₂ at gate 90₂₂, routing packet P4(λ₁) to outlet terminal 110₂ via combiner 100₂.

However, data collision is likely to occur between packets of the same wavelength at the inputs of a combiner 100 if their header pulses are inserted to successive time slots of the same header and partially coincide with a control pulse due to timing inaccuracies. To resolve the collision problem, the embodiment of Fig. 20 is modified as shown in Fig. 22 in which the network is implemented in a 4 x 2 switch configuration. Optical splitters 80₁, 80₂, 80₃ and 80₄, arranged to receive optical packets P1(λ₁), P2(λ₂), P3(λ₁) and P4(λ₂) from waveguides 70₁-70₄, are connected respectively to wavelength tunable optical gates 91₁ⱼ, 91₂ⱼ, 91₃ⱼ and 91₄ⱼ (j=1, 2). The outputs of gates 91ᵢ₁ and 91ᵢ₂ (i = 1, 2, 3, 4) are coupled to the i*th* inputs of combiners 100₁ and 100₂. Gates 91ᵢ₁ and 91ᵢ₂ are tuned to wavelength λ₁ and λ₂, respectively, and supplied with control pulses C'₁ and C'₂ via resistors 19₁ and 19₂, respectively, from gate controller 10g.

As shown in Fig. 23A, gate control pulses C₁ and C₂ generated by controller 10g have triggering voltages of a duration twice as long as the duration of the header pulse. Assume that header pulses P1a and P2a are inserted to time slot t₁-t₂, and header pulses P3a and P4a are assigned time slot t₂-t₃. It is seen that gate 91₁₁ is excited upon coincidence between header pulse P1a and control pulse C'₁, producing a voltage drop across resistor 19₁ and allowing packet P1(λ₁) to be routed to combiner 100₁. Similarly, gate 91₂₂ is excited upon coincidence between header pulse P2a and control pulse C'₂, producing a voltage drop across resistor 19₂ and allowing packet P2(λ₂) to be routed to combiner 100₂. However, due to the voltage drop across resistor 19₁, gate 91₃₁ is not excited and packet P3(λ₁) is the loser of the contention with packet P1(λ₁). In like manner, packet P4(λ₂) is the loser of the contention with packet P2(λ₂).

Alternatively, the triggering voltages of all control pulses are of equal duration to the duration of the header pulse and the header of each packet has different light intensities as shown in Fig. 23B. In this way, packets P1∼P4 have decreasing levels of priority in the order named so that contention between packets P1 and P3 at gates 91₁₁ and 91₃₁ is resolved by giving priority to packet P1, while contention between packets P2 and P4 Is resolved by giving priority to packet P2.

The foregoing description shows only preferred embodiments of the present invention. Various modifications are apparent to those skilled in the art without departing from the scope of the present invention which is only limited by the appended claims. Therefore, the embodiments shown and described are only illustrative, not restrictive.

## Claims

1. An optical self-routing network comprising:
N optical splitters (3₁-3₃) associated respectively with N inlet terminals, (2₁-2₃), each of the splitters splitting an optical signal from the associated inlet terminal into M replicas of the optical signal;
M optical combined (5₁-5₄) associated respectively with M outlet terminals (6₁-6₄), each of the optical combiners combining N optical signals incident thereon into a combined optical signal and coupling the combined optical signal to the associated outlet terminal;
N x M optical gates (4) connected between the N optical splitters (3) and the M optical combiners (5), each of the optical gates allowing passage of an optical signal incident thereon when said incident optical signal timely coincides with an electrical signal applied thereto; said optical gates (4) being divided into M sets of N optical gates; and
gate control means (10) for supplying a gate control electrical signal to the optical gates (4) of each set,
characterized in that
said gate control means (10) is adapted to supply during M successive intervals gate control electrical signals (Cₙ,Cᵢⱼ) respectively to the optical gates of each set so that one of the optical gates of a given set exclusively allows passage of an optical signal (Pₙ,Pᵢⱼ) incident thereon when the gate control electrical signal applied thereto is the earliest or has the highest amplitude of the gate control electrical signals which are successively applied to the optical gates of said given set or when the incident optical signal is the earliest or has the highest intensity of the optical signals incident on the optical gates of the set.

2. An optical self-routing network as claimed in claim 1, characterized in that said gate control electrical signals applied to the optical gates of each set (C₃ᵢ-C₁ᵢ) are successively time-shifted.

3. An optical self-routing network as claimed in claim 1, characterized in that the optical gates of each set are commonly assigned a unique time interval (t₁-t₄), and those of said optical signals supplied to the optical gates of each set (P₁ₐ-P₃ₐ) successively shifted.

4. An optical self-routing network as claimed in claim 1, characterized in that said gate control electrical signals supplied to the optical gates of each set have different amplitudes (V₁-V₃).

5. An optical self-routing network as claimed in claim 1, characterized in that the optical signals applied to the optical gates of each set have different intensities (S₁-S₃).

6. An optical self-routing network as claimed in claim 1, characterized in that said optical signal is a packet having a first and a second header,
in that said optical gates are divided into a first array of M sets of N optical gates each (4₁₁, 4₂₁, 4₃₁; 4₁₂, 4₂₂, 4₃₂; 4₁₃, 4₂₃, 4₃₃; 4₁₄, 4₂₄, 4₃₄, fig. 8) and a second array of M sets of N optical gates each (4₁₅, 4₂₅, 4₃₅; 4₁₆, 4₂₆, 4₃₆; 4₁₇, 4₂₇, 4₃₇; 4₁₈, 4₂₈, 4₃₈),
in that the N optical gates of each set of the first array are connected respectively at input ends thereof to the N optical splitters (3₁∼3₃), each optical gate of each set of the first array receiving one of M replicas of an optical packet incident from the corresponding optical splitter to allow passage of the incident replica therethrough upon time coincidence between the first header of the incident replica and a first electrical control signal ;
in that the M sets of the second array correspond respectively to the M optical combiners (5₁∼5₄), and the N optical gates of each set of the second array are connected at input ends thereof respectively to the N optical gates of each set of the first array and connected at output ends thereof to the optical combiner to which the set of the optical gates corresponds, each optical gate of the second array receiving an optical packet incident from the first array and allowing passage of the incident optical packet therethrough upon time coincidence between the second header of the incident packet and a second electrical control signal; and
in that said gate control means (10c) supplies a gate control electrical signal to each set of optical gates of the first array during M successive intervals as said first electrical control signal, subsequently simultaneously supplies N gate control electrical signals of different amplitudes respectively to the optical gates of each set of the second array during M successive intervals as said second electrical control signal so that one of the N optical gates of a given set of the second array exclusively allows passage of an optical packet incident thereon when the amplitude of the gate control electrical signal applied thereto is the highest of the gate control electrical signals applied to the N optical gates of said given set.

7. An optical self-routing network as claimed in claim 1, characterized in that said optical signal is a packet having a first and a second header,
in that said optical gates are divided into a first array of M sets of N optical gates each (4₁₁, 4₂₁, 4₃₁; 4₁₂, 4₂₂, 4₃₂; 4₁₃, 4₂₃, 4₃₃; 4₁₄, 4₂₄, 4₃₄, fig. 10) and a second array of M sets of N optical gates each (4₁₅, 4₂₅, 4₃₅; 4₁₆, 4₂₆, 4₃₆; 4₁₇, 4₂₇, 4₃₇; 4₁₈, 4₂₈, 4₃₈),
in that the N optical gates of each set of the first array are connected respectively at input ends thereof to the N optical splitters (3₁∼3₃), each optical gate of each set receiving one of M replicas of an optical packet incident from the corresponding optical splitter to allow passage of the incident replica therethrough upon time coincidence between the first header of the incident replica and first a electrical control signal ;
in that the M sets of the second array correspond respectively to the M optical combiners (5₁∼5₄), and the N optical gates of each set of the second array being respectively connected at input ends thereof to the N optical gates of each set of the first array and connected at output ends thereof to the optical combiner to which the set of the optical gates corresponds, each optical gate of the second array receiving an optical packet incident from the first array and allowing passage of the incident optical packet therethrough upon time coincidence between the second header of the incident packet and a second electrical control signal,
in that the optical gates of each array are assigned a unique time interval and the first headers of optical packets incident on the optical gates of the first array occur at different points within said unique time interval and the second headers of optical packets incident on the optical gates of the second array have different light intensities; and
in that said gate control means (10c) supplies a gate control electrical signal to each set of optical gates of said first array during M successive intervals as said first electrical control signal, subsequently supplies a gate control electrical signal to each set of optical gates of said second array during M successive intervals as said second electrical control signal so that one of the N optical gates of a given set of the second array exclusively allows passage of an optical packet incident thereon when the light intensity of the second header of the incident optical packet is the highest of the second headers of the optical packets incident on the N optical gates of said given set.

8. An optical self-routing network as claimed in claim 1, characterized in that said optical signal is a packet having a first and a second header,
in that said optical gates (40₁₁∼40₄₂, 41₁∼41₄) are divided into a plurality of pairs of first-stage optical gates (40₁₁∼40₄₂) and a plurality of pairs of second-stage optical gates (41₁∼41₄), and said optical combiners are divided into a plurality of first-stage optical combiners (50₁∼50₄) and a plurality of second-stage optical (50₅∼50₆) combiners, the first-stage optical combiners being associated respectively with said pairs of first-stage optical gates, and the second-stage optical combiners being associated respectively to the pairs of the second-stage optical gates;
in that each of the first-stage optical gates (40₁₁∼40₄₂) allows passage of an incident optical packet to the associated first-stage combiner (50) when the first header of said incident optical packet timely coincides with a first electrical control signal applied thereto;
in that each of the second-stage optical gates (41₁∼41₄) receives an optical packet incident thereon from the associated first-stage combiner (50₁∼50₅) and allows passage of the incident optical packet to the associated second-stage combiner (50₅, 50₆) when the second header of said incident optical packet timely coincides with a second electrical control signal applied thereto; and
in that said gate control means (10d) simultaneously supplies gate control electrical signals of different amplitudes respectively to the first-stage optical gates of each pair as said first electrical control signal so that one of the first-stage optical gates of a given pair exclusively allows passage of an optical packet incident thereon when the amplitude of the gate control electrical signal applied thereto is the highest of the signals applied to the optical gates of said given pair, and subsequently simultaneously supplies gate control electrical signals of different amplitudes respectively to the second-stage optical gates as said second electrical control signal so that one of the second-stage optical gates exclusively allows passage of an optical packet incident thereon when the amplitude of the gate control electrical signal applied thereto is the highest of the signals applied to the second-stage optical gates.

9. An optical self-routing network as daimed in claim 1, characterized in that said optical signal is a packet having a first and a second header,
in that said optical gates (40₁₁∼40₄₂, 41₁∼41₄) are divided into a plurality of pairs of first-stage optical gates (4₁₁∼40₄₂) and a plurality of pairs of second-stage optical gates (41₁∼41₄), and said optical combiners are divided into a plurality of first-stage optical combiners (50₁∼50₄) and a plurality of second-stage optical (50₅∼50₆) combiners, the first-stage optical combiners being associated respectively with said pairs of first-stage optical gates, and the second-stage optical combiners being associated respectively to the pairs of the second-stage optical gates;
in that each of the first-stage optical gates (40₁₁∼40₄₂) allows passage of an incident optical packet to the associated first-stage combiner (50) when the first header of said incident optical packet timely coincides with a first electrical control signal applied thereto;
in that each of the second-stage optical gates (41₁∼41₄) receives an optical packet incident thereon from the associated first-stage combiner (50₁∼50₅) and allows passage of the incident optical packet to the associated second-stage combiner (50₅, 50₆) when the second header of said incident optical packet timely coincides with a second electrical control signal applied thereto; and
in that said gate control means (10d, figs. 14, 15) simultaneously supplies a gate control electrical signal to the first-stage optical gates as said first electrical control signal so that one of the first-stage optical gates of a given pair exclusively allows passage of an optical packet incident thereon when the light intensity of the first header of the incident optical packet is the highest of the first headers incident on the optical gates of said given pair, and subsequently simultaneously supplying a gate electrical signal to the second-stage optical gates as said second electrical control signal so that one of the second-stage optical gates exclusively allows passage of an optical packet incident thereon when the light intensity of the second header of the incident optical packet is the highest of the second headers incident on the second-stage optical gates.

10. An optical self-routing network as claimed in claim 8 or 9, characterized in that the number of the first-stage optical combiners (50₁∼50₄) is 1/2 of the number of said first-stage optical gates (40₁₁∼40₄₂), the number of the second-stage optical gates (41₁∼41₄) is equal to the number of the first-stage optical combiners (50₁∼50₄), and the number of the second-stage optical combiners (50₅∼50₆) is 1/4 of the number of said first-stage optical gates (40₁₁∼40₄₂).

11. An optical self-routing network as claimed in claim 1, 4 or 5, characterized in that the optical signals applied to said self-routing network are carried on a plurality of wavelengths, and each of said optical gates is selectively transmissive of an optical signal of one of said wavelengths.

12. An optical self-routing network as claimed in claim 11, characterized in that each of said optical gates (90₁₁∼90₁₄, 90₂₁∼90₂₄) comprises a narrow-band optical gate element (85) for passing therethrough an optical packet incident from one side of the optical gate, and a wide-band optical gate element (86) connected to said narrow-band optical gate for passing an optical packet incident from the narrow-band optical gate element to the other side of the optical gate.

13. An optical self-routing network as claimed in claim 1, further comprising means (30, 32, fig. 3) disposed between said N optical splitters and said N x M optical gates for passing optical signals from said splitters to said N x M optical gates and directing optical signals returning from said optical gates to said M optical combiners.

## Patentansprüche

1. Selbstleitweglenkendes optisches Netzwerk, das aufweist:
N optische Verteiler (3₁-3₃), die N Eingangsanschlüssen (2₁-2₃) zugeordnet sind, wobei jeder der Verteiler ein optisches Signal vom zugeordneten Eingangsanschluß in M Kopien des optischen Signals aufspaltet;
M optische Kombinatoren (5₁-5₄), die M Ausgangsanschlüssen (6₁-6₄) zugeordnet sind, wobei jeder der optischen Kombinatoren N dort einfallende optische Signale zu einem kombinierten optischen Signal vereinigt und das kombinierte optische Signal an den zugeordneten Ausgangsanschluß ankoppelt;
N x M optische Gatter (4), die zwischen die N optischen Verteiler (3) und die M optischen Kombinatoren (5) geschaltet sind, wobei jedes der optischen Gatter ein dort einfallendes optisches Signal durchläßt, wenn das einfallende optische Signal mit einem dort anliegenden elektrischen Signal zeitlich zusammenfällt, wobei die optischen Gatter (4) in M Sätze von N optischen Gattern unterteilt sind;
eine Gattersteuereinrichtung (10) zum Zuführen eines elektrischen Gattersteuersignals zu den optischen Gattern (4) jedes Satzes; dadurch gekennzeichnet, daß
die Gattersteuereinrichtung (10) so eingerichtet ist, daß sie während M aufeinanderfolgender Intervalle elektrische Gattersteuersignale (Cₙ, Cᵢⱼ) den optischen Gattern jedes Satzes jeweils so zuführt, daß eines der optischen Gatter eines gegebenen Satzes nur dann ein dort einfallendes optisches Signal (Pn, Pij) durchläßt, wenn das dort anliegende elektrische Gattersteuersignal von den elektrischen Gattersteuersignalen, die nacheinander an die optischen Gatter des gegebenen Satzes angelegt werden, das früheste Signal ist oder die höchste Amplitude aufweist, oder wenn das einfallende optische Signal das früheste von den in die optischen Gatter des Satzes einfallenden Signalen ist oder die höchste Intensität aufweist.

2. Selbstleitweglenkendes Netzwerk nach Anspruch 1, dadurch gekennzeichnet, daß die an den optischen Gattern jedes Satzes anliegenden elektrischen Gattersteuersignale (C₃ᵢ-C₁ᵢ) stufenweise zeitlich verschoben sind.

3. Selbstleitweglenkendes optisches Netzwerk nach Anspruch 1, dadurch gekennzeichnet, daß die optischen Gatter jedes Satzes gemeinsam einem einzigen Zeitintervall (t₁-t₄) zugeordnet sind, und daß die den optischen Gattern jedes Satzes zugeführten optischen Signale (P1a-P3a) stufenweise verschoben sind.

4. Selbstleitweglenkendes optisches Netzwerk nach Anspruch 1, dadurch gekennzeichnet, daß die den optischen Gattern jedes Satzes zugeführten elektrischen Gattersteuersignale verschiedene Amplituden (V₁-V₃) aufweisen.

5. Selbstleitweglenkendes optisches Netzwerk nach Anspruch 1, dadurch gekennzeichnet, daß die an die optischen Gatter jedes Satzes angelegten optischen Signale verschiedene Intensitäten (S₁-S₃) aufweisen.

6. Selbstleitweglenkendes optisches Netzwerk nach Anspruch 1, dadurch gekennzeichnet, daß das optische Signal ein Paket mit einem ersten und einem zweiten Kopf ist;
daß die optischen Gatter in eine erste Matrix von M Sätzen mit jeweils N optischen Gattern (4₁₁, 4₂₁, 4₃₁; 4₁₂, 4₂₂, 4₃₂; 4₁₃, 4₂₃, 4₃₃; 4₁₄, 4₂₄, 4₃₄; Fig. 8) und eine zweite Matrix von M Sätzen mit jeweils N optischen Gattern (4₁₅, 4₂₅, 4₃₅; 4₁₆, 4₂₆, 4₃₆; 4₁₇, 4₂₇, 4₃₇; 4₁₈, 4₂₈, 4₃₈) unterteilt sind;
daß die N optischen Gatter jedes Satzes der ersten Matrix jeweils an ihren Eingangsenden mit den N optischen Verteilern (3₁-3₃) verbunden sind, wobei jedes optische Gatter jedes Satzes der ersten Matrix eine von M Kopien eines vom entsprechenden optischen Verteiler einfallenden optischen Pakets empfängt und bei einem zeitlichen Zusammenfallen zwischen dem ersten Kopf der einfallenden Kopie und einem ersten elektrischen Steuersignal die einfallende Kopie durchläßt;
daß die M Sätze der zweiten Matrix jeweils den M optischen Kombinatoren (5₁-5₄) entsprechen und die N optischen Gatter jedes Satzes der zweiten Matrix an ihren Eingangsenden jeweils mit den N optischen Gattern jedes Satzes der ersten Matrix und an ihren Ausgangsenden mit dem optischen Kombinator verbunden sind, dem der Satz der optischen Gatter entspricht, wobei jedes optische Gatter der zweiten Matrix ein von der ersten Matrix einfallendes optisches Paket empfängt und das einfallende optische Paket durchläßt, wenn der zweite Kopf des einfallenden Pakets mit einem zweiten elektrischen Steuersignal zeitlich zusammenfällt; und
daß die Gattersteuereinrichtung (10c) jedem Satz von optischen Gattern der ersten Matrix während M aufeinanderfolgender Intervalle ein elektrisches Gattersteuersignal als erstes elektrisches Steuersignal zuführt, anschließend während M aufeinanderfolgender Intervalle den optischen Gattern jedes Satzes der zweiten Matrix jeweils gleichzeitig N elektrische Gattersteuersignale mit verschiedenen Amplituden als zweites elektrisches Steuersignal zuführt, so daß eines der N optischen Gatter eines gegebenen Satzes der zweiten Matrix nur dann ein dort einfallendes optisches Paket durchläßt, wenn die Amplitude des dort anliegenden elektrischen Gattersteuersignals die höchste Amplitude der elektrischen Gattersteuersignale ist, die an den N optischen Gattern des gegebenen Satzes anliegen.

7. Selbstleitweglenkendes optisches Netzwerk nach Anspruch 1, dadurch gekennzeichnet, daß das optische Signal ein Paket mit einem ersten und einem zweiten Kopf ist;
daß die optischen Gatter in eine erste Matrix von M Sätzen mit jeweils N optischen Gattern (4₁₁, 4₂₁, 4₃₁; 4₁₂, 4₂₂, 4₃₂; 4₁₃, 4₂₃, 4₃₃; 4₁₄, 4₂₄, 4₃₄; Fig. 10) und eine zweite Matrix von M Sätzen mit jeweils N optischen Gattern (4₁₅, 4₂₅, 4₃₅, 4₁₆, 4₂₆, 4₃₆, 4₁₇, 4₂₇, 4₃₇; 4₁₈, 4₂₈, 4₃₈) unterteilt sind;
daß die N optischen Gatter jedes Satzes der ersten Matrix an ihren Eingangsenden jeweils mit den N optischen Verteilern (3₁-3₃) verbunden sind, wobei jedes optische Gatter jedes Satzes eine von M Kopien eines vom entsprechenden optischen Verteiler einfallenden optischen Pakets empfängt und die einfallende Kopie durchläßt, wenn der erste Kopf der einfallenden Kopie mit einem ersten elektrischen Steuersignal zeitlich zusammenfällt;
daß die M Sätze der zweiten Matrix jeweils den M optischen Kombinatoren (5₁-5₄) entsprechen, und daß die N optischen Gatter jedes Satzes der zweiten Matrix jeweils an ihren Eingangsenden mit den N optischen Gattern jedes Satzes der ersten Matrix und an ihren Ausgangsenden mit dem optischen Kombinator verbunden sind, dem der Satz von optischen Gattern entspricht, wobei jedes optische Gatter der zweiten Matrix ein von der ersten Matrix einfallendes optisches Paket empfängt und das einfallende optische Paket durchläßt, wenn der zweite Kopf des einfallenden Pakets mit einem zweiten elektrischen Steuersignal zeitlich zusammenfällt;
daß die optischen Gatter jeder Matrix einem einzigen Zeitintervall zugeordnet sind und die ersten Köpfe von optischen Paketen, die in die optischen Gatter der ersten Matrix einfallen, zu verschiedenen Zeitpunkten innerhalb des einzigen Zeitintervalls auftreten, und daß die zweiten Köpfe von optischen Paketen, die in die optischen Gatter der zweiten Matrix einfallen, verschiedene Lichtintensitäten aufweisen; und
daß die Gattersteuereinrichtung (10c) während M aufeinanderfolgender Intervalle jedem Satz von optischen Gattern der ersten Matrix ein elektrisches Gattersteuersignal als erstes elektrisches Steuersignal zuführt, anschließend während M aufeinanderfolgender Intervalle jedem Satz von optischen Gattern der zweiten Matrix ein elektrisches Gattersteuersignal als zweites elektrisches Steuersignal zuführt, so daß eines der N optischen Gatter eines gegebenen Satzes der zweiten Matrix ein dort einfallendes optisches Paket nur dann durchläßt, wenn die Lichtintensität des zweiten Kopfes des einfallenden optischen Pakets die höchste Lichtintensität der zweiten Köpfe der optischen Pakete ist, die in die N optischen Gatter des gegebenen Satzes einfallen.

8. Selbstleitweglenkendes optisches Netzwerk nach Anspruch 1, dadurch gekennzeichnet, daß das optische Signal ein Paket mit einem ersten und einem zweiten Kopf ist;
daß die optischen Gatter (40₁₁-40₄₂, 41₁-41₄) in mehrere Paare von optischen Gattern (40₁₁-40₄₂) einer ersten Stufe und mehrere Paare von optischen Gattern (41₁-41₄) einer zweiten Stufe unterteilt sind, und daß die optischen Kombinatoren in mehrere optische Kombinatoren (50₁-50₄) einer ersten Stufe und mehrere optische Kombinatoren (50₅-50₆) einer zweiten Stufe unterteilt sind, wobei die optischen Kombinatoren der ersten Stufe jeweils den Paaren von optischen Gattern der ersten Stufe und die optischen Kombinatoren der zweiten Stufe jeweils den Paaren von optischen Gattern der zweiten Stufe zugeordnet sind;
daß jedes der optischen Gatter (40₁₁-40₄₂) der ersten Stufe ein einfallendes optisches Paket zum zugehörigen Kombinator (50) der ersten Stufe durchläßt, wenn der erste Kopf des einfallenden optischen Pakets mit einem dort anliegenden ersten elektrischen Steuersignal zeitlich zusammenfällt;
daß jedes der optischen Gatter (41₁-41₄) der zweiten Stufe ein dort einfallendes optisches Paket von dem zugehörigen Kombinator (50₁-50₅) der ersten Stufe empfängt und das einfallende optische Paket zum zugehörigen Kombinator (50₅-50₆) der zweiten Stufe durchläßt, wenn der zweite Kopf des einfallenden optischen Pakets mit einem dort anliegenden zweiten elektrischen Steuersignal zeitlich zusammenfällt; und
daß die Gattersteuereinrichtung (10d) den optischen Gattern jedes Paares der ersten Stufe jeweils gleichzeitig elektrische Gattersteuersignale mit verschiedenen Amplituden als erstes elektrisches Steuersignal zuführt, so daß eines der optischen Gatter eines gegebenen Paares der ersten Stufe ein dort einfallendes optisches Paket nur dann durchläßt, wenn die Amplitude des dort anliegenden elektrischen Gattersteuersignals die höchste Amplitude der Signale ist, die an den optischen Gattern des gegebenen Paares anliegen, und anschließend den optischen Gattern der zweiten Stufe jeweils gleichzeitig elektrische Gattersteuersignale mit verschiedenen Amplituden als zweites elektrisches Steuersignal zuführt, so daß eines der optischen Gatter der zweiten Stufe ein dort einfallendes optisches Paket nur dann durchläßt, wenn die Amplitude des dort anliegenden elektrischen Gattersteuersignals die höchste Amplitude der Signale ist, die an den optischen Gattern der zweiten Stufe anliegen.

9. Selbstleitweglenkendes optisches Netzwerk nach Anspruch 1, dadurch gekennzeichnet, daß das optische Signal ein Paket mit einem ersten und einem zweiten Kopf ist;
daß die optischen Gatter (40₁₁-40₄₂, 41₁-41₄) in mehrere Paare von optischen Gattern einer ersten Stufe (40₁₁-40₄₂) und mehrere Paare von optischen Gattern einer zweiten Stufe (41₁-41₄) unterteilt sind, und daß die optischen Kombinatoren in mehrere optische Kombinatoren einer ersten Stufe (50₁-50₄) und mehrere optische Kombinatoren einer zweiten Stufe (50₅-50₆) unterteilt sind, wobei die optischen Kombinatoren der ersten Stufe jeweils den Paaren von optischen Gattern der ersten Stufe und die optischen Kombinatoren der zweiten Stufe jeweils den Paaren von optischen Gattern der zweiten Stufe zugeordnet sind;
daß jedes der optischen Gatter der ersten Stufe (40₁₁-40₄₂) ein einfallendes optisches Paket zu dem zugehörigen Kombinator der ersten Stufe (50) durchläßt, wenn der erste Kopf des einfallenden optischen Pakets mit einem dort anliegenden ersten elektrischen Steuersignal zeitlich zusammenfällt;
daß jedes der optischen Gatter der zweiten Stufe (41₁-41₄) ein dort einfallendes optisches Paket vom zugehörigen Kombinator der ersten Stufe (50₁-50₅) empfängt und das einfallende optische Paket zum zugehörigen Kombinator der zweiten Stufe (50₅, 50₆) durchläßt, wenn der zweite Kopf des einfallenden optischen Pakets mit einem dort anliegenden zweiten elektrischen Steuersignal zeitlich zusammenfällt; und
daß die Gattersteuereinrichtung (10d, Fig. 14, 15) den optischen Gattern der ersten Stufe gleichzeitig ein elektrisches Gattersteuersignal als erstes elektrisches Steuersignal zuführt, so daß eines der optischen Gatter eines gegebenen Paares der ersten Stufe ein dort einfallendes optisches Paket nur dann durchläßt, wenn die Lichtintensität des ersten Kopfes des einfallenden optischen Pakets die höchste Lichtintensität der ersten Köpfe ist, die in die optischen Gatter des gegebenen Paares einfallen, und anschließend den optischen Gattern der zweiten Stufe gleichzeitig ein elektrisches Gattersteuersignal als zweites elektrisches Steuersignal zuführt, so daß eines der optischen Gatter der zweiten Stufe ein dort einfallendes optisches Paket nur dann durchläßt, wenn die Lichtintensität des zweiten Kopfes des einfallenden optischen Pakets die höchste Lichtintensität der zweiten Köpfe ist, die in die optischen Gatter der zweiten Stufe einfallen.

10. Selbstleitweglenkendes optisches Netzwerk nach einem der Ansprüche 8 oder 9, dadurch gekennzeichnet, daß die Anzahl der optischen Kombinatoren der ersten Stufe (50₁-50₄) gleich der halben Anzahl der optischen Gatter der ersten Stufe (40₁₁-40₄₂) ist, daß die Anzahl der optischen Gatter der zweiten Stufe (41₁-41₄) gleich der Anzahl der optischen Kombinatoren der ersten Stufe (50₁-50₄) ist, und daß die Anzahl der optischen Kombinatoren der zweiten Stufe (50₅-50₆) gleich einem Viertel der Anzahl der optischen Gatter der ersten Stufe (40₁₁-40₄₂) ist.

11. Selbstleitweglenkendes optisches Netzwerk nach einem der Ansprüche 1, 4 oder 5, dadurch gekennzeichnet, daß die an das selbstleitweglenkende Netzwerk angelegten optischen Signale auf mehreren Trägerwellenlängen übertragen werden und daß jedes der optischen Gatter für ein optisches Signal mit einer der Wellenlängen selektiv durchlässig ist.

12. Selbstleitweglenkendes optisches Netzwerk nach Anspruch 11, dadurch gekennzeichnet, daß jedes der optischen Gatter (90₁₁-90₁₄, 90₂₁-90₂₄) ein optisches Schmalband-Gatterelement (85) zum Durchlassen eines optischen Pakets, das von einer Seite des optischen Gatters einfällt, sowie ein mit dem optischen Schmalband-Gatter verbundenes optisches Breitband-Gatterelement (86) aufweist, um ein von dem optischen Schmalband-Gatterelement einfallendes optisches Paket zur anderen Seite des optischen Gatters durchzulassen.

13. Selbstleitweglenkendes optisches Netzwerk nach Anspruch 1, das ferner Einrichtungen (30, 32, Fig. 3) aufweist, die zwischen den N optischen Verteilern und den N x M optischen Gattern angeordnet sind, um optische Signale von den Verteilern zu den N x M optischen Gattern durchzulassen und von den optischen Gattern zurückkehrende optische Signale zu den M optischen Kombinatoren zu lenken.

## Revendications

1. Réseau d'autoacheminement optique comprenant :
N séparateurs optiques (3₁ à 3₃) associés respectivement à N bornes d'entrée (2₁ à 2₃), chacun des séparateurs séparant un signal optique provenant de la borne d'entrée associée en M répliques du signal optique ;
M combineurs optiques (5₁ à 5₄) associés respectivement aux M bornes de sortie (6₁ à 6₄), chacun des combineurs optiques combinant N signaux optiques incidents sur celui-ci en un signal optique combiné et couplant le signal optique ccmbiné à la borne de sortie associée ;
N x M portes optiques (4) connectées entre les N séparateurs optiques (3) et les M combineurs optiques (5), chacune des portes optiques permettant le passage d'un signal optique incident sur celle-ci lorsque ledit signal optique incident coïncide dans le temps avec un signal électrique appliqué à celle-ci,
lesdites portes optiques étant divisées en M ensembles de N portes optiques; et
un moyen de commande de porte (10) pour délivrer un signal électrique de commande de porte aux portes optiques (4) de chaque ensemble, caractérisé en-ce que
ledit moyen de commande de porte (10) est conçu pour délivrer pendant M intervalles successifs des signaux électriques de commande de porte (Cₙ, Cᵢⱼ), respecti-vement, aux portes optiques de chaque ensemble de sorte qu'une des portes optiques d'un ensemble donné permet exclusivement le passage d'un signal optique (Pₙ, Pᵢⱼ) incident sur celle-ci lorsque le signal électrique de commande de porte appliqué à celle-ci est le premier ou a l'amplitude la plus élevée des signaux électriques de commande de porte qui sont successivement appliqués aux portes optiques dudit ensemble donné ou lorsque le signal optique incident est le premier ou a l'intensité la plus élevée des signaux optiques incidents sur les portes optiques de l'ensemble.

2. Réseau d'autoacheminement optique selon la revendication 1, caractérisé en ce que les signaux électriques de commande de porte appliqués aux portes optiques de chaque ensemble (C₃ᵢ à C₁ᵢ) sont successivement décalés dans le temps.

3. Réseau d'autoacheminement optique selon la revendication 1, caractérisé en ce que les portes optiques de chaque ensemble sont affectées en commun d'un intervalle de temps particulier (t₁ à t₄) et ceux des signaux optiques qui sont délivrés aux portes optiques de chaque ensemble (P1a à P3a) sont successivement décalés.

4. Réseau d'autoacheminement optique selon la revendication 1, caractérisé en ce que lesdits signaux électriques de commande de porte délivrés aux portes optiques de chaque ensemble ont des amplitudes différentes (V₁ à V₃).

5. Réseau d'autoacheminement optique selon la revendication 1, caractérisé en ce que les signaux optiques appliqués aux portes optiques de chaque ensemble ont des intensités différentes (S₁ à S₃).

6. Réseau d'autoacheminement optique selon la revendication 1, caractérisé en ce que ledit signal optique est un paquet ayant une première en-tête et une seconde en-tête,
en ce que lesdites portes optiques sont divisées en une première matrice de M ensembles de N portes optiques chacune (4₁₁, 4₂₁, 4₃₁; 4₁₂, 4₂₂, 4₃₂; 4₁₃, 4₂₃, 4₃₃ ; 4₁₄, 4₂₄, 4₃₄, fig. 8) et en une seconde matrice de M ensembles de N portes optiques chacune (4₁₅, 4₂₅, 4₃₅ ; 4₁₆, 4₂₆, 4₃₆ ; 4₁₇, 4₂₇, 4₃₇ ; 4₁₈, 4₂₈, 4₃₈),
en ce que les N portes optiques de chaque ensemble de la première matrice sont connectées respectivement en leurs extrémités d'entrée aux N séparateurs optiques (3₁ à 3₃), chaque porte optique de chaque ensemble de la première matrice recevant une des M répliques d'un paquet optique incident du séparateur optique correspondant pour permettre le passage de la réplique incidente à travers celle-ci lors de la coïncidence temporelle entre la première en-tête de la réplique incidente et un premier signal de commande électrique ;
en ce que les M ensembles de la seconde matrice correspondent respectivement aux M combineurs optiques (5₁ à 5₄) et que les N portes optiques de chaque ensemble de la seconde matrice sont connectées en leurs extrémités d'entrée respectivement aux N portes optiques de chaque ensemble de la première matrice et sont connectées en leurs extrémités de sortie au combineur optique auquel l'ensemble des portes optiques correspond, chaque porte optique de la seconde matrice recevant un paquet optique incident de la première matrice et permettant le passage du paquet optique incident à travers celle-ci lors de la coïncidence temporelle entre la seconde en-tête du paquet incident et un second signal de commande électrique ; et
en ce que ledit moyen de commande de porte (10c) délivre un signal électrique de commande de porte à chaque ensemble des portes optiques de la première matrice pendant M intervalles successifs comme ledit premier signal de commande électrique, ultérieurement délivre simultanément N signaux électriques de commande de porte d'amplitudes différentes respectivement aux portes optiques de chaque ensemble de la seconde matrice pendant M intervalles successifs comme ledit second signal de commande électrique, de sorte qu'une des N portes optiques d'un ensemble donné de la seconde matrice permet exclusivement le passage d'un paquet optique incident sur celle-ci lorsque l'amplitude du signal électrique de commande de porte appliqué à celle-ci est la plus élevée des signaux électriques de commande de porte appliqués aux N portes optiques dudit ensemble donné.

7. Réseau d'autoacheminement optique selon la revendication 1, caractérisé en ce que ledit signal optique est un paquet ayant une première en-tête et une seconde en-tête,
en ce que lesdites portes optiques sont divisées en une première matrice de M ensembles de N portes optiques chacune (4₁₁, 4₂₁, 4₃₁ ; 4₁₂, 4₂₂, 4₃₂ ; 4₁₃, 4₂₃, 4₃₃ ; 4₁₄, 4₂₄, 4₃₄, fig. 10) et en une seconde matrice de M ensembles de N portes optiques chacune (4₁₅, 4₂₅, 4₃₅ ; 4₁₆, 4₂₆, 4₃₆ ; 4₁₇, 4₂₇, 4₃₇ ; 4₁₈, 4₂₈, 4₃₈),
en ce que les N portes optiques de chaque ensemble de la première matrice sont connectées respectivement en leurs extrémités d'entrée aux N séparateurs optiques (3₁ à 3₃), chaque porte optique de chaque ensemble recevant une des M répliques d'un paquet optique incident du séparateur optique correspondant afin de permettre le passage de la réplique incidente à travers celle-ci lors de la coïncidence temporelle entre la première en-tête de la réplique incidente et un premier signal de commande électrique ;
en ce que les M ensembles de la seconde matrice correspondent respectivement aux M combineurs optiques (5₁ à 5₄) et les N portes optiques de chaque ensemble de la seconde matrice étant respectivement connectées en leurs extrémités d'entrée aux N portes optiques de chaque ensemble de la première matrice et connectées en leurs extrémités de sortie au combineur optique auquel l'ensemble des portes optiques correspond, chaque porte optique de la seconde matrice recevant un paquet optique incident de la première matrice et permettant le passage du paquet optique incident à travers celle-ci lors de la coïncidence temporelle entre la seconde en-tête du paquet incident et un second signal de commande électrique,
en ce que les portes optiques de chaque matrice sont affectées d'un intervalle de temps particulier et les premières en-têtes des paquets optiques incidents sur les portes optiques de la première matrice arrivent à des points différents à l'intérieur dudit intervalle de temps particulier et les secondes en-têtes des paquets optiques incidents sur les portes optiques de la seconde matrice ont des intensités lumineuses différentes ; et
en ce que le moyen de commande de porte (10c) délivre un signal électrique de commande de porte à chaque ensemble des portes optiques de ladite première matrice pendant M intervalles successifs comme ledit premier signal de commande électrique, délivre ultérieurement un signal électrique de commande de porte à chaque ensemble des portes optiques de ladite seconde matrice pendant M intervalles successifs comme ledit second signal de commande électrique de sorte qu'une des N portes optiques d'un ensemble donné de la seconde matrice permet exclusivement le passage d'un paquet optique incident sur celle-ci lorsque l'intensité lumineuse de la seconde en-tête du paquet optique incident est la plus élevée parmi les secondes en-têtes des paquets optiques incidents sur les N portes optiques dudit ensemble donné.

8. Réseau d'autoacheminement optique selon la revendication 1, caractérisé en ce que ledit signal optique est un paquet ayant une première en-tête et une seconde en-tête,
en ce que lesdites portes optiques (40₁₁ à 40₄₂, 41₁ à 41₄) sont divisées en une pluralité de paires de portes optiques de premier étage (40₁₁ à 40₄₂) et une pluralité de paires de portes optiques de second étage (41₁ à 41₄) et lesdits combineurs optiques sont divisés en une pluralité de combineurs optiques de premier étaqe (50₁ à 50₄) et une pluralité de combineurs optiques de second étage (50₅ à 50₆), les combineurs optiques de premier étage étant associés respectivement auxdites paires des portes optiques de premier étage, et les combineurs optiques de second étage étant associés respectivement aux paires des portes optiques de second étage ;
en ce que chacune des portes optiques de premier étage (40₁₁ à 40₄₂) permet le passage d'un paquet optique incident au combineur de premier étage associé (50) lorsque la première en-tête dudit paquet optique incident coïncide dans le temps avec un premier signal de commande électrique appliqué à celle-ci ;
en ce que chacune des portes optiques de second étage (41₁ à 41₄) reçoit un paquet optique incident sur celle-ci du combineur de premier étage associé (50₁ à 50₅) et permet le passage du paquet optique incident au combineur du second étage associé (50₅, 50₆) lorsque la seconde en-tête dudit paquet optique incident coïncide dans le temps avec un second signal de commande électrique appliqué à celle-ci ; et
en ce que ledit moyen de commande de porte (10d) délivre simultanément des signaux électriques de commande de porte d'amplitudes différentes respectivement aux portes optiques de premier étage de chaque paire comme ledit premier signal de commande électrique de sorte qu'une des portes optiques de premier étage d'une paire donnée permet exclusivement le passage d'un paquet optique incident sur celle-ci lorsque l'amplitude du signal électrique de commande de porte appliqué à celle-ci est la plus élevée des signaux appliqués aux portes optiques de ladite paire donnée, et ultérieurement délivre simultanément des signaux électriques de commande de porte d'amplitudes différentes respectivement aux portes optiques de second étage comme ledit second signal de commande électrique de sorte qu'une des portes optiques de second étage permet exclusivement le passage d'un paquet optique incident sur celle-ci lorsque l'amplitude du signal électrique de commande de porte appliqué à celle-ci est la plus élevée des signaux appliqués aux portes optiques de seconde étage.

9. Réseau d'autoacheminement optique selon la revendication 1, caractérisé en ce que ledit signal optique est un paquet ayant une première en-tête et une seconde en-tête,
en ce que les portes optiques (40₁₁ à 40₄₂, 41₁ à 41₄) sont divisées en une pluralité de paires de portes optiques de premier étage (40₁₁ à 40₄₂) et une pluralité de paires de portes optiques de seconde étage (41₁ à 41₄) et lesdits combineurs optiques sont divisés en une pluralité de combineurs optiques de premier étage (50₁ à 50₄) et une pluralité de combineurs optiques de second étage (50₅ à 50₆), les combineurs optiques de premier étage étant associés respectivement auxdites paires des portes optiques de premier étage et les combineurs optiques de second étage étant associés respectivement aux paires des portes optiques de seconde étage ;
en ce que chacune des portes optiques de premier étage (40₁₁ à 40₄₂) permet le passage d'un paquet optique incident au combineur de premier étage associé (50) lorsque la première en-tête dudit paquet optique incident coïncide dans le temps avec un premier signal de commande électrique appliqué à celle-ci ;
en ce que chacune des portes optiques de second étage (41₁ à 41₄) reçoit un paquet optique incident sur celle-ci du combineur de premier étage associé (50₁ à 50₅) et permet le passage du paquet optique incident au combineur de second étage associé (50₅ à 50₆) lorsque la seconde en-tête dudit paquet optique incident coïncide dans le temps avec un second signal de commande électrique appliqué à celle-ci ; et
en ce que ledit moyen de commande de porte (10 d, Fig. 14, 15) délivre simultanément un signal électrique de commande de porte aux portes optiques de premier étage comme ledit premier signal de commande électrique de sorte qu'une des portes optiques de premier étage d'une paire donnée permet exclusivement le passage d'un paquet optique incident sur celle-ci lorsque l'intensité lumineuse de la première en-tête du paquet optique incident est la plus élevée des premières en-têtes incidentes sur les portes optiques de ladite paire donnée, et ultérieurement délivre simultanément un signal électrique de commande de porte aux portes optiques de seconde étage comme ledit second signal de commande électrique, de sorte qu'une des portes optiques de second étage permet exclusivement le passage d'un paquet optique incident sur celle-ci lorsque l'intensité lumineuse de la seconde en-tête du paquet optique incident est la plus élevée des secondes en-têtes incidentes sur les portes optiques de second étage.

10. Réseau d'autoacheminement optique selon la revendication 8 ou 9, caractérisé en ce que le nombre des combineurs optiques de premier étage (50₁ à 50₄) est la moitié du nombre desdites portes optiques de premier étage (40₁₁ à 40₄₂), le nombre des portes optiques de second étage (41₁ à 41₄) est égal au nombre des combineurs optiques de premier étaqe (50₁ à 50₄) et le nombre des combineurs optiques de second étage (50₅ à 50₆) est le quart du nombre des portes optiques de premier étage (40₁₁ à 40₄₂).

11. Réseau d'autoacheminement optique selon la revendication 1, 4 ou 5, caractérisé en ce que les signaux optiques appliqués audit réseau d'autoacheminement sont véhiculés sur une pluralité de longueurs d'onde et chacune desdites portes optiques est sélectivement apte à transmettre un signal optique d'une desdites longueurs d'ondes.

12. Réseau d'autoacheminement optique selon la revendication 11, caractérisé en ce que chacune desdites portes optiques (90₁₁ à 90₁₄, 90₂₁ à 90₂₄) comprend un élément de porte optique à bande étroites (85) pour laisser passer à travers celle-ci un paquet optique incident à partir d'un côté de la porte optique et un élément de porte optique à large bande (86) connecté à ladite porte optique à bande étroite pour laisser passer un paquet optique incident à partir de l'élément de porte optique à bande étroite vers l'autre côté de la porte optique.

13. Réseau d'autoacheminement optique selon la revendication 1, comprenant de plus un moyen (30, 32, fig. 3) disposé entre lesdits N séparateurs optiques et lesdites N x M portes optiques pour laisser passer les signaux optiques provenant desdits séparateurs vers lesdites N x M portes optiques et diriger les signaux optiques revenant desdites portes optiques vers lesdits M combineurs optiques.
